(19) Europäisches Patentamt / European Patent Office / Office européen des brevets

(11) **EP 3 922 693 A1**

(12) **EUROPEAN PATENT APPLICATION**
published in accordance with Art. 153(4) EPC


(43) Date of publication:
**15.12.2021 Bulletin 2021/50**

(21) Application number: **20753088.2**

(22) Date of filing: **30.01.2020**

(51) Int Cl.:
***C09J 133/00*** *(2006.01)* ***C09J 133/04*** *(2006.01)*
***C09J 7/10*** *(2018.01)* ***C09J 7/38*** *(2018.01)*

(86) International application number:
**PCT/JP2020/003510**

(87) International publication number:
**WO 2020/162330 (13.08.2020 Gazette 2020/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2019 JP 2019019830**



(71) Applicant: **Nitto Denko Corporation**
**Ibaraki-shi, Osaka 567-8680 (JP)**

(72) Inventors:
- **KAWAMOTO, Takatoshi**
  **Ibaraki-shi, Osaka 567-8680 (JP)**
- **FUKUHARA, Junji**
  **Ibaraki-shi, Osaka 567-8680 (JP)**
- **HIRAYAMA, Takamasa**
  **Ibaraki-shi, Osaka 567-8680 (JP)**

(74) Representative: **Müller-Boré & Partner Patentanwälte PartG mbB**
**Friedenheimer Brücke 21**
**80639 München (DE)**


(54) **PRESSURE-SENSITIVE ADHESIVE SHEET**


(57) Provided is a PSA sheet that can bond well with at least a prescribed bonding strength to an adherend before a curing treatment and that can greatly prevent adhesive transfer during separation from the adherend after the curing treatment even when exposed to a high temperature. Provided is a PSA sheet having a PSA layer comprising carbon-carbon double bonds. The PSA sheet satisfies a property that the PSA layer has an elastic modulus of 22 MPa or greater, determined by nanoindentation after a heating/curing treatment in which the PSA sheet is heated at 180 °C for one hour, left standing at 25 °C for 30 minutes and then irradiated with UV rays at an intensity of 60 mW/cm$^2$.


[Fig. 1]

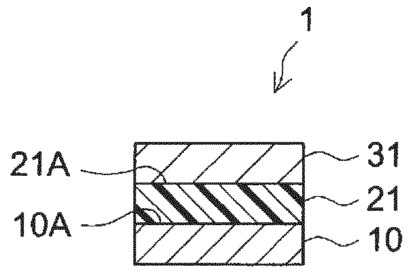


FIG.1

EP 3 922 693 A1

## Description

[Technical Field

The present invention relates to a pressure-sensitive adhesive sheet.
This application claims priority to Japanese Patent Application No. 2019-019830 filed on February 6, 2019; and the entire content thereof is herein incorporated by reference.

[Background Art]

In general, pressure-sensitive adhesive (PSA) exists as a soft solid (a viscoelastic material) in a room temperature range and has a property to adhere easily to an adherend with some pressure applied. Because of the ease of application to adherends, PSA is widely used in various fields, as a supported PSA sheet having a PSA layer on a support or as a supportless PSA sheet free of a support. While adhered on adherends, such PSA can be exposed to changes in temperature such as heat addition. After serving the bonding purpose, it may be removed from the adherends. Published technical documents teaching this type of conventional art include Patent Documents 1 and 2.

[Citation List]

[Patent Literature]

[Patent Document 1] Japanese Patent Application Publication No. 2015-120884
[Patent Document 2] Japanese Patent Application Publication No. 2018-12751

[Summary of Invention]

[Technical Problem]

PSA is under study for several applications accompanying exposure to high temperatures and eventual separation from adherends. One specific example is a use where several miniaturized semiconductor chips (LED chips, etc.) are mounted onto the adhesive face of a single PSA sheet, processed such as sealed with resin on the PSA sheet, and separated from the PSA sheet after processed. In this application, because it is heated at a high temperature during the resin sealing, heat resistance is required such as unimpaired ease of removal even after heating, etc. Chip mounting for a printed circuit board (PCB) may also involve heating during wire bonding and resin sealing. Thus, similar to the use in semiconductor chip processing, applications of heat-resistant PSA can be expected. Furthermore, in solder paste printing on thin wafers, a PSA sheet capable of withstanding the heat during a solder reflow process can be expected to be applied for use as a support tape for thin wafers.
Conventional PSA has not, however, bring about satisfactory ease of separation or removal from adherends after heated at high temperatures as described above. For instance, UV-curable PSA is known as common PSA typically removed from adherends after serving the bonding purpose. The UV-curable PSA can be readily removed from adherends upon timely UV irradiation before removal to reduce the adhesive strength. However, there has been a problem that when applied UV-curable PSA is exposed to a high temperature at or above a certain temperature, subsequent UV irradiation does not reduce the adhesive strength, leading to the occurrence of adhesive transfer during removal from adherends.
With respect to post-heating separation and removal from adherends, for instance, Patent Document 2 proposes a PSA that is adhered to an adherend, heated and then irradiated with active energy rays such as UV to obtain leftover-adhesive-free removal from the adherend. However, the PSA proposed in Patent Document 2 is conceptually designed to improve the post-curing removability and better prevent adhesive transfer by somewhat limiting the initial contact with the contoured adherend surface before UV irradiation (before curing), thereby imposing a limitation on simultaneously obtaining a higher initial bonding strength. In addition, the results of study have shown that there is room for improvement in preventing adhesive transfer depending on the heating temperature while in use, etc. It is significant for practical use to obtain a PSA that can exhibit great bonding strength to adherends and also bring about high-level prevention of adhesive transfer during separation from the adherends even in applications potentially exposed to high temperatures.
The present invention has been made in view of these circumstances with an objective to provide a PSA sheet that can bond well to adherends with at least a prescribed bonding strength before curing and that can also greatly prevent adhesive transfer during separation from the adherends after curing even when exposed to high temperatures.

[Solution to Problem]

The present Description provides a PSA sheet having a PSA layer comprising a carbon-carbon double bond(s). The PSA sheet satisfies a property that the PSA layer has an elastic modulus of 22 MPa or greater, determined by nanoindentation after a heating/curing treatment in which the PSA sheet is heated at 180 °C for one hour, left standing at 25 °C for 30 minutes and then irradiated with UV rays at an intensity of 60 $mW/cm^2$.

The PSA layer has certain softness before curing and can bond well with at least a prescribed bonding strength to an adherend. The PSA layer is designed so that the internal carbon-carbon double bonds undergo reaction to cure the PSA by prescribed heating treatment and curing treatment ("heating/curing treatment" or sometimes simply "heating/curing") so as to have an elastic modulus (by nanoindentation) of 22 MPa or greater. Thus, even when exposed to a high temperature, adhesive transfer is greatly prevented during separation from the adherend.

The PSA layer's elastic modulus can typically be determined by nanoindentation. As used herein, the terms "PSA sheet" and "PSA layer" refer to a "PSA sheet" and a "PSA layer" before the heating/curing treatment, respectively.

The PSA sheet according to a preferable embodiment has an adhesive strength reduction rate of 65 % or higher, determined by the following equation:

$$\text{Adhesive strength reduction rate (\%)} = (1 - B/A) \times 100$$

In this equation, A is the initial 180° peel strength to stainless steel plate (N/20mm) and B is the post-heating/curing 180° peel strength to stainless steel plate (N/20mm).

Before curing, the PSA sheet satisfying this property has at least the prescribed adhesive strength and bonds well to an adherend. Furthermore, even when exposed to a high temperature, after curing, in addition to high-level prevention of adhesive transfer, the adhesive strength is reduced by 65 % or more; and therefore, it separates well from the adherend.

In a preferable embodiment, the PSA layer comprises a polymer having the carbon-carbon double bond(s). The polymer is more preferably an acrylic polymer. In a typical embodiment, the acrylic polymer is formed from monomers including an alkyl (meth)acrylate. This embodiment preferably brings about the effect of the art disclosed herein.

In a preferable embodiment, the alkyl (meth)acrylate comprises an alkyl (meth)acrylate A1 whose alkyl group has 9 or fewer carbon atoms. Such an embodiment limited in side-chain alkyl group length tends to obtain a high cohesive strength capable of greatly preventing adhesive transfer and is likely to show excellent bonding strength to a polar adherend such as metal. The alkyl (meth)acrylate A1 content in the monomers is preferably 20 % by weight or higher (i.e. the monomers have at least 20 % alkyl (meth)acrylate A1 by weight).

In some embodiments, the alkyl (meth)acrylate can comprise an alkyl (meth)acrylate A2 whose alkyl group has 7 or more carbon atoms, as the alkyl (meth)acrylate A1 or as a monomer different from the alkyl (meth)acrylate A1. With the use of alkyl (meth)acrylate A2, for instance, the post-curing adhesive strength is inclined to decrease, likely resulting in superior adherend separability and adhesive transfer prevention.

In some embodiments, the PSA sheet further has a substrate layer. At least one face of the substrate layer is provided with the PSA layer. The PSA sheet having a substrate layer has certain rigidity (structural stiffness); and therefore, it may provide excellent ease of processing and handling. The PSA sheet according to an embodiment is an adhesively single-faced PSA sheet in which the PSA layer is provided to a first face of the substrate layer. The PSA sheet according to another embodiment is an adhesively double-faced PSA sheet in which the PSA layer is provided to each face of the substrate layer. The PSA sheet according to yet another embodiment is an adhesively double-faced PSA sheet in which a first PSA layer is provided as the PSA layer to the first face of the substrate layer and a second PSA layer different from the first PSA layer is provided to the second face of the substrate layer. Alternatively, the art disclosed herein can be preferably implemented in an embodiment of a substrate-free adhesively double-faced PSA sheet essentially consisting of the PSA layer.

This Description provides a PSA sheet having a PSA layer comprising carbon-carbon double bonds. The PSA layer comprises an acrylic polymer. The acrylic polymer is formed from monomers including an alkyl (meth)acrylate. The alkyl (meth)acrylate comprises an alkyl (meth)acrylate whose alkyl group has 7 or fewer carbon atoms. With the use of acrylic polymer comprising the alkyl (meth)acrylate whose alkyl group has 7 or fewer carbon atoms as a monomeric unit, the PSA layer can bond well to an adherend with at least a prescribed bonding strength. A curing treatment allows the carbon-carbon double bonds internally present in the PSA layer to undergo reaction to cure; and even when exposed to a high temperature, adhesive transfer can be greatly prevented during separation from the adherend.

[Brief Description of Drawings]

Fig. 1 shows a cross-sectional diagram schematically illustrating a constitutional example of the PSA sheet.
Fig. 2 shows a cross-sectional diagram schematically illustrating another constitutional example of the PSA sheet.
Fig. 3 shows a cross-sectional diagram schematically illustrating another constitutional example of the PSA sheet.
Fig. 4 shows a cross-sectional diagram schematically illustrating another constitutional example of the PSA sheet.
Fig. 5 shows a cross-sectional diagram schematically illustrating another constitutional example of the PSA sheet.
Fig. 6 shows a cross-sectional diagram schematically illustrating another constitutional example of the PSA sheet.

[Description of Embodiments]

Preferred embodiments of the present invention are described below. Matters necessary to practice this invention other than those specifically referred to in this description can be understood as design specifications by a person skilled in the art based on the conventional art in the pertaining field. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of the PSA sheet provided as an actual product.

<Constitution of PSA sheet>

The PSA sheet disclosed herein has a PSA layer. The PSA layer typically constitutes at least one face of the PSA sheet. The PSA sheet can be a substrate-supported PSA sheet having the PSA layer on one or each face of a substrate (support) or a substrate-free PSA sheet wherein the PSA layer is held on a release liner (which can also be thought as a substrate having a release face). In this case, the PSA sheet may consist of the PSA layer. The concept of PSA sheet as used herein may encompass so-called PSA tape, PSA label and PSA film. The PSA layer is typically formed continuously, but is not limited to such a configuration. For instance, it may also be formed in a regular or random pattern of dots, stripes, etc. The PSA sheet provided by the present Description may be in a roll form or a flat sheet form. Alternatively, the PSA sheet may be further processed into various forms.

The PSA sheet disclosed herein may have, for instance, cross-sectional structures schematically illustrated in Fig. 1 to Fig. 6. Among them, Fig. 1 and Fig. 2 show constitutional examples of the PSA sheet that is on a substrate and adhesively single-faced. PSA sheet 1 shown in Fig. 1 comprises a PSA layer 21 provided to a first face 10A (non-releasable) of a substrate layer 10 with the surface (contact face) 21A of PSA layer 21 protected with a release liner 31 of which at least the PSA layer side is a release face. PSA sheet 2 shown in Fig. 2 comprises a PSA layer 21 provided to a first face 10A (non-releasable) of a substrate 10. In the PSA sheet 2, the second face 10B of substrate layer 10 is a release face. Thus, when PSA sheet 2 is wound, the PSA layer 21 is brought in contact with the second face 10B and the PSA layer's surface (contact face) 21B is protected with the second face 10B of substrate layer 10.

Fig. 3 and Fig. 4 show constitutional examples of the PSA sheet that is on a substrate and adhesively double-faced. PSA sheet 3 shown in Fig. 3 has PSA layers 21 and 22 provided to the respective faces (both non-releasable) of a substrate layer 10; and the PSA layers are protected, respectively, with release liners 31 and 32 each having a release face at least on the PSA layer side. PSA sheet 4 shown in Fig. 4 has PSA layers 21 and 22 provided to the respective faces (both non-releasable) of a substrate layer 10; and between the two, the first PSA layer 21 is protected with a release liner 31 whose both sides are release faces. PSA sheet 4 can be wound to bring the second PSA layer 22 in contact with the backside of release liner 31 so that PSA layer 22 is also protected with release liner 31. In PSA sheets 3 and 4 shown in Figs. 3 and 4, each of PSA layers 21 and 22 can be the PSA layer disclosed herein (described in detail later); or one (e.g. PSA layer 21) of them can be the PSA layer disclosed herein and the other PSA layer (e.g. PSA layer 22) can be a PSA layer (e.g. a heretofore known PSA layer) different from the PSA layer disclosed herein.

Fig. 5 and Fig. 6 show constitutional examples of the PSA sheet that is free of a substrate and adhesively double-faced. PSA sheet 5 shown in Fig. 5 has a substrate-free PSA layer 21 whose both faces 21A and 21B are protected with release liners 31 and 32 each having a release face at least on the PSA layer side. PSA sheet 6 shown in Fig. 6 has a substrate-free PSA layer 21 of which a first surface (contact face) 21A is protected with a release liner 31 whose both faces are release faces; and when wound, the second surface (contact face) 21B of PSA layer 21 is brought in contact with the backside of release liner 31 and the second face 21B is also protected with release liner 31.

<PSA layer>

(Elastic modulus after heating/curing treatment)

In some typical embodiments, the PSA sheet disclosed herein is characterized by satisfying the property that

the PSA layer has an elastic modulus of 22 MPa or greater, determined by nanoindentation after a heating/curing treatment where the PSA sheet is heated at 180 °C for one hour, left standing at 25 °C for 30 minutes and then irradiated with UV rays at an intensity of 60 $mW/cm^2$. More specifically, although the PSA layer has been formed through a PSA layer-forming process such as drying, it is in the preheating/curing state (it has not been subjected to the heating/curing treatment); and while in this state, it is constituted to have a post-heating/curing elastic modulus of 22 MPa or greater by nanoindentation. By satisfying this property, the PSA layer has certain softness before the curing treatment and can bond well to an adherend with at least a prescribed bonding strength. In addition, the PSA layer satisfying this property is designed to have at least the prescribed elastic modulus by the heating/curing treatment; and therefore, even when exposed to a high temperature, adhesive transfer is greatly prevented while being separated from the adherend. It is noted that the PSA sheet disclosed herein includes an embodiment not limited in post-heating/curing PSA layer elastic modulus; and in such an embodiment, the PSA layer is not limited to a species having this property.

From the standpoint of preventing adhesive transfer and reducing the post-heating/curing adhesive strength, the PSA layer disclosed herein after the heating/curing treatment has an elastic modulus of suitably about 30 MPa or greater (e.g. about 50 MPa or greater), preferably about 70 MPa or greater, more preferably about 90 MPa or greater, yet more preferably about 100 MPa or greater, or particularly preferably about 120 MPa or greater (typically about 140 MPa or greater, e.g. about 160 MPa or greater). The PSA layer's maximum elastic modulus after the heating/curing treatment is not particularly limited. It can be about 500 MPa or less, or even about 300 MPa or less.

The PSA layer's elastic modulus after the heating/curing treatment is determined by nanoindentation. The concrete measurement method is in accordance with the Examples described later.

The PSA layer disclosed herein is preferably of a material that exists as a soft solid (a viscoelastic material) in a room temperature range and has a property to adhere easily to an adherend with some pressure applied. As defined in C. A. Dahlquist, "Adhesion: Fundamentals and Practice" (McLaren & Sons (1966), P. 143), the PSA referred to herein can be a material that has a property satisfying complex tensile modulus E* (1Hz) $< 10^7$ $dyne/cm^2$ (typically, a material that exhibits the described characteristics at 25 °C).

(Carbon-carbon double bonds)

The PSA layer disclosed herein comprises carbon-carbon double bonds. In this embodiment, by subjecting the PSA layer to a curing treatment, the carbon-carbon double bonds present in the PSA layer undergo reaction to increase the elastic modulus. The carbon-carbon double bonds are chemically stable, being unreactive towards the sort of moisture and oxygen in air under typical, industrially applicable storage conditions. On the other hand, for instance, they undergo reaction (e.g. polymerization reaction, crosslinking reaction) when radicals are formed in the PSA layer upon irradiation of active energy rays with a photopolymerization initiator included therein or upon heating with a thermal polymerization initiator included therein. By using the PSA layer where carbon-carbon double bonds are present, the elastic modulus will rapidly increase under the prescribed curing conditions.

No particular limitations are imposed on the form in which the carbon-carbon double bonds are present in the PSA layer. The carbon-carbon double bonds can be present, for instance, in a polymer (typically the base polymer described later), oligomer or monomer. In particular, a polymer having relatively low mobility in the PSA layer is preferable. One example of the polymer is a polymer having carbon-carbon double bonds in side chains or the main chain. Here, having carbon-carbon double bonds in the main chain encompasses carbon-carbon double bonds present in the main chain backbone and those present at the main chain termini. Similar to the polymer, examples of the oligomer include an oligomer having carbon-carbon double bonds in a side chain or the main chain (in the main chain backbone, at main chain termini).

No particular limitations are imposed on the form of a carbon-carbon double bond possibly present in a side chain of the polymer or oligomer, or on the form of a carbon-carbon double bond possibly present in the monomer. For instance, a carbon-carbon double bond may be present as a vinyl group-containing group (typically an organic group). The vinyl group-containing group can be a vinyl group, allyl group or (meth)acryloyl group. The method for incorporating carbon-carbon double bonds into the polymer or oligomer is not particularly limited. A suitable method can be selected among methods known to a skilled person. From the standpoint of molecular designing, etc., a preferable method incorporates carbon-carbon double bonds into side chains of the polymer or oligomer.

As used herein, the main chain of a polymer or oligomer refers to the linear structure constituting the backbone of the polymer or oligomer. A side chain of a polymer or oligomer refers to a group (pendant, side chain) bonded to the main chain or to a molecular chain considered a pendant.

In the art disclosed herein, typical methods for allowing carbon-carbon double bonds to exist in the PSA layer include the following:

(1) A method where a polymer having carbon-carbon double bonds (or a C=C-containing polymer) is used as the polymer forming the PSA layer. In particular, in this method, a C=C-containing polymer is included in a PSA composition and the PSA composition is used to form the PSA layer.

(2) A method where in addition to the PSA layer-forming polymer, a C=C-containing polymer, oligomer and/or monomer are included in the PSA layer. In particular, in this method, a suitable amount of the polymer, oligomer and/or monomer is added in a PSA composition and the PSA composition is used to form the PSA layer.

The methods (1) and (2) can be employed in combination.

Examples of the PSA layer with the presence of carbon-carbon double bonds include a PSA layer having the presence of a C=C-containing group (reactive group or radically reactive group in particular). With the presence of the reactive group in the PSA layer, the reactive group undergoes reaction under curing conditions, thereby increasing the elastic modulus of the PSA layer. The reactive group is preferably essentially inert (nonreactive) before the curing treatment (e.g. at or below 40 °C, typically at room temperature (e.g. 25 °C), under atmospheric pressure).

Favorable examples of the PSA layer with the presence of carbon-carbon double bonds include a PSA layer comprising a compound having a reactive group ((meth)acryloyl group) represented by general formula (1):

[Chem 1]

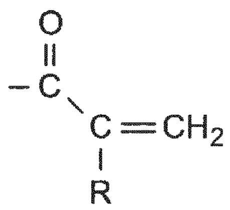

(1)

(In the formula, R is a hydrogen atom or a methyl group). Here, the compound encompasses a polymer (typically base polymer), oligomer and monomer. The elastic modulus of the PSA layer comprising the compound will increase as the carbon-carbon double bond in the reactive group of the compound undergoes reaction under curing conditions. The compound is preferably a polymer.

When the compound is a polymer (typically base polymer), in other words, when the polymer (typically base polymer) has a reactive group represented by general formula (1), the method for incorporating the reactive group into the polymer (typically base polymer) is not particularly limited, and a suitable method can be selected among methods known to a skilled person. For instance, it is preferable to use a method similar to the reactive group incorporation method in acrylic polymer described later. When the compound is an oligomer, the same method as for the polymer can be used to incorporate the reactive group into the oligomer. When the compound is a monomer, a monomer having the reactive group can be obtained or synthesized, and included in the PSA layer.

The C=C-containing polymer is not particularly limited. For instance, among the species exemplified as the polymer described later, a suitable polymer can be selected in view of the PSA layer's properties, etc. When the polymer is a C=C-free polymer, carbon-carbon double bonds can be incorporated into the C=C-free polymer by chemical modification or like method and the resulting species can be preferably used.

In a specific example of the C=C incorporation method in polymer, a monomer having a functional group ("functional group A" hereinafter) is copolymerized and a compound having a carbon-carbon double bond as well as a functional group ("functional group B" hereinafter) reactive towards the functional group A is allowed to undergo reaction (typically condensation, addition reaction) without losing the carbon-carbon double bond (while keeping the carbon-carbon double bond intact). Examples of the combination of functional groups A and B include a carboxy group and epoxy group combination, a carboxy group and aziridinyl group combination, and a hydroxy group and isocyanate group combination. In particular, from the standpoint of the ease of reaction tracing, the hydroxy group and isocyanate group combination is preferable. As long as a C=C-containing polymer can be obtained from the combination, in the combination of functional groups A and B, the first can be a functional group A and the second a functional group B, or the first can be a functional group B and the second a functional group A. For instance, with respect to the hydroxy group and isocyanate group combination, the functional group A can be the hydroxy group (in this case, the functional group B is the isocyanate group) or the isocyanate group (in this case, the functional group B is the hydroxy group). In particular, a combination of a polymer having a hydroxy group and the compound having an isocyanate group is preferable. This combination is particularly preferable when the polymer is an acrylic polymer.

When the polymer is a vinyl alcohol-based polymer (typically polyvinyl alcohol), one favorable example is a method where a vinyl alcohol-based polymer (typically a C=C-free vinyl alcohol-based polymer) is allowed to react with a vinyl halide such as vinyl bromide or an allyl halide such as allyl bromide. In this method, the reaction is carried out under suitable basic conditions to obtain a vinyl alcohol-based polymer having vinyl groups in side chains. Alternatively,

for instance, it is also possible to employ a C=C-containing polymer production method using a microorganism that produces a polymer as described in Japanese Patent No. 4502363. For various conditions in this method such as species of microorganism and microbial culturing conditions, the conditions according to the patent journal can be used or suitable modifications can be made within the bounds of technical common knowledge of a skilled person.

As for the molar ratio ($M_A/M_B$) of moles ($M_A$) of functional group A to moles ($M_B$) of functional group B, from the standpoint of their reactivities, it is typically suitably 0.2 or higher, preferably 0.5 or higher (e.g. 0.7 or higher, typically 1.0 or higher); and it is typically suitably 10 or lower, or preferably in the range of 5.0 or lower (e.g. 3.0 or lower, typically 2.5 or lower). In some embodiments, the molar ratio $M_A/M_B$ can be 2.0 or lower, 1.5 or lower, or even 1.3 or lower (e.g. 1.1 or lower). From the standpoint of increasing contact opportunities between functional groups A and B, a C=C- and functional group B-containing compound can be added somewhat in excess. In this case, the molar ratio $M_A/M_B$ is preferably below 1 (e.g. below 0.99, below 0.95). Alternatively, when the functional group A is used for another reaction (crosslinking reaction with a crosslinking agent, etc.), the molar ratio $M_A/M_B$ is preferably above 1, that is, the molar ratio $M_A/M_B > 1$. The added amount of the functional group B-containing compound is about 1 part by weight or greater to 100 parts by weight of the functional group-A containing polymer (typically, before C=C incorporation) while satisfying the molar ratio $M_A/M_B$. For instance, it is suitably about 5 parts by weight or greater (typically about 10 parts by weight or greater), preferably about 12 parts by weight or greater, more preferably about 15 parts by weight or greater, yet more preferably about 18 parts by weight or greater, or possibly about 21 parts by weight or greater (e.g. 23 parts by weight or greater). The amount of the functional group B-containing compound added to 100 parts by weight of the functional group-A containing polymer (typically, before C=C incorporation) is suitably about 40 parts by weight or less, preferably about 35 parts by weight or less, more preferably about 30 parts by weight or less, or possibly, for instance, about 25 parts by weight or less. For instance, the molar ratio $M_A/M_B$ and the added amount of the C=C-and functional group B-containing compound can be preferably applied to, for instance, an embodiment using the acrylic polymer described later as the polymer.

The C=C-containing polymer can also be, for instance, a diene-based polymer (typically a conjugated diene-based polymer). The diene-based polymer (typically a conjugated diene-based polymer) is obtainable typically by polymerization or copolymerization of a diene (typically a conjugated diene). Examples of the diene-based polymer (typically a conjugated diene-based polymer) include butadiene-based polymers such as polybutadiene and styrene-butadiene copolymer; isoprene-based polymers such as polyisoprene and styrene-isoprene copolymer; and chloroprene polymers such as polychloroprene.

From the standpoint of the reactivity, for the carbon-carbon double bond, an external double bond is preferable to an internal double bond. Here, the internal double bond refers to a double bond present internal to the main chain of a polymer or oligomer. Of the carbon-carbon double bond, both carbon atoms constitute the main chain. The external double bond refers to a double bond present external to a molecular chain (e.g. main chain) of a polymer or oligomer. It is noted that when a main-chain terminus of a polymer or oligomer has a carbon-carbon double bond, it is an external double bond.

When the art disclosed herein is implemented in an embodiment having a PSA layer comprising a C=C-containing polymer (typically base polymer), the amount of C=C-containing polymer (typically base polymer) in the PSA layer can be selected to obtain a target post-heating/curing PSA layer elastic modulus and is not limited to a specific range. In some embodiments, the C=C-containing polymer content in the PSA layer is about 10 % by weight or higher, or suitably about 50 % by weight or higher (e.g. about 70 % by weight or higher). From the standpoint of increasing the post-curing PSA layer elastic modulus, it is preferably about 90 % by weight or higher, more preferably about 95 % by weight or higher, yet more preferably about 97 % by weight or higher, or possibly about 99 % by weight or higher (e.g. 99 % to 100 % by weight).

Examples of the C=C-containing monomer and oligomer (or hereinafter simply the monomer/oligomer) disclosed herein include (meth)acryloyl group-containing compounds such as urethane oligomers, urethane (meth)acrylate, trimethylolpropane tri(meth)acrylate, tetramethylolmethane tetra(meth)acrylate, pentaerythritol tri(meth)acrylate, pentaerythritol tetra(meth)acrylate, dipentaerythritol monohydroxy penta(meth)acrylate, dipentaerythritol hexa(meth)acrylate, 1,4-butanediol di(meth)acrylate, 1,6-butanediol di(meth)acrylate and polyethylene glycol di(meth)acrylate; and dimers to pentamers of the (meth)acryloyl group-containing compounds. These can be used solely as one species or in a combination of two or more species. The C=C-containing oligomer can also be one, two or more species of oligomers such as urethane-based oligomers, polyether-based oligomers, polyester based oligomers, polycarbonate-based oligomers, and polybutadiene-based oligomers.

As used herein, the oligomer refers to a polymer having a molecular weight below $3.0 \times 10^4$. The oligomer's molecular weight is preferably 100 or higher and preferably $1.0 \times 10^4$ or lower. As the molecular weight of an oligomer, a weight average molecular weight (Mw) determined by gel permeation chromatography (GPC) based on standard polystyrenes or the molecular weight calculated from the chemical formula is used.

When the art disclosed herein is implemented in an embodiment having a PSA layer comprising a C=C-containing monomer/oligomer, the amount of the C=C-containing monomer/oligomer in the PSA layer is selected to

obtain a target post-heating/curing PSA layer elastic modulus. Accordingly, it is not limited to a specific range.

(Radical precursor)

The PSA layer disclosed herein preferably comprises a radical precursor. It is known that regardless of the presence or absence of carbon-carbon double bonds, when heated, radicals are formed upon cleavage of molecular bonds of a polymer or the like, or upon the sort of oxidation by oxygen in air ("Polymer Deterioration/Decay <Classified by Resin> Troubleshooting and Latest Modification/Stabilization Technologies" by the Polymer Physical Property Research Group, published: 1981). Thus, depending on the curing conditions, a radical precursor may not be an essential component. However, from the standpoint of rapidly and assuredly increasing the PSA layer's elastic modulus by the curing treatment, it is preferable to proactively include a radical precursor in the PSA layer. With the inclusion of a radical precursor in the PSA layer, radicals are formed from the radical precursor during the curing treatment to react with carbon-carbon double bonds present in the PSA layer, whereby the PSA layer's elastic modulus rapidly increases.

As used herein, the "radical precursor" refers to an agent that under curing conditions, it itself undergoes the sort of decomposition to form a radical. Favorable examples include photopolymerization initiators used in radical polymerization. Hereinafter, an agent that forms a radical as it undergoes the sort of self-decomposition when irradiated with active energy rays such as UV may be referred to as an active energy ray irradiation radical precursor (typically, a photo-radical precursor). For the radical precursor, solely one species or a combination of two or more species can be used.

In some preferable embodiments, as the radical precursor, a photopolymerization initiator is used. In this embodiment, by irradiating active energy rays (e.g. UV) to the PSA layer adhered on an adherend, the PSA layer is allowed to cure and contract, whereby high-level prevention of adhesive transfer can be preferably achieved. As the photopolymerization initiator, one, two or more species can be used among, for instance, a ketal-based photopolymerization initiator, acetophenone-based photopolymerization initiator, benzoin ether-based photopolymerization initiator, acylphosphine oxide-based photopolymerization initiator, $\alpha$-ketol-based photopolymerization initiator, aromatic sulfonyl chloride-based photopolymerization initiator, oxime esterbased photopolymerization initiator, benzoin-based photopolymerization initiator, benzyl-based photopolymerization initiator, benzophenone-based photopolymerization initiator, alkylphenone-based photopolymerization initiator and thioxanthone-based photopolymerization initiator.

The photopolymerization initiator preferably has a hydroxy group in the molecule. As such a hydroxy group-containing photopolymerization initiator, a species having a hydroxy group can be preferably used among the aforementioned photopolymerization initiators. Favorable examples include benzophenone derivatives, alkylphenone derivatives, and acetophenone derivatives.

Examples of benzophenone derivatives include o-acryloxybenzophenone, p-acryloxybenzophenone, o-methacryloxybenzophenone, p-methacryloxybenzophenone and p-(meth)acryloxyethoxybenzophenone. Benzophenone-4-carboxylic acid esters can also be used, such as 1,4-butanediol mono(meth)acrylate, 1,2-ethanediol mono(meth)acrylate and 1,8-octanediol mono(meth)acrylate. Examples of alkylphenone derivatives include 1-[4-(2-hydroxyethoxy)-phenyl]-2-hydroxy-2-methyl-1-propan-1-one and 2-hydroxy-1-{4-[4-(2-hydroxy-2-methyl-propionyl)-benzyl]phenyl}-2-methyl-propan-1-one. Examples of acetophenone derivatives include 1-hydroxycyclohexyl-phenyl-ketone. The photopolymerization initiators can be used solely as one species or in a combination of two or more species. Among them, for their excellent curing rates and thick-film curability, 1-hydroxycyclohexyl-phenyl-ketone and 2-hydroxy-1-{4-[4-(2-hydroxy-2-methyl-propionyl)-benzyl]phenyl}-2-methyl-propan-1-one are preferable.

Favorable examples of alkylphenone-based photopolymerization initiators include a benzylketal-based photopolymerization initiator, hydroxyalkylphenone-based photopolymerization initiator (typically $\alpha$-hydroxyalkylphenone) , hydroxyacetophenone-based photopolymerization initiator (typically $\alpha$-hydroxyacetophenone) and aminoalkylphenone-based photopolymerization initiator (typically $\alpha$-aminoalkylphenone). These can be used solely as one species or in a combination of two or more species. In particular, hydroxyalkylphenone-based photopolymerization initiators and aminoalkylphenone-based photopolymerization initiators are preferable. Specific examples of hydroxyalkylphenone-based photopolymerization initiators include the aforementioned 2-hydroxy-1-{4-[4-(2-hydroxy-2-methyl-propionyl)-benzyl] phenyl}-2-methyl-propan-1-one. Specific examples of aminoalkylphenone-based photopolymerization initiators include 2-benzyl-2-(dimethylamino)-1-(4-morpholinophenyl)-1-butanone.

Other preferable examples include acylphosphine oxide-based photopolymerization initiators such as bis(2,4,6-trimethylbenzoyl)phenylphosphine oxide, bis(2,4,6-tnmethylbenzoyl)-2,4-di-n-butoxyphenylphosphine oxide, 2,4,6-trimethylbenzoyldiphenylphosphine oxide and bis(2,6·dimethoxybenzoyl)-2,4,4-trimethylpentylphosphine oxide.

An oxime ester-based photopolymerization initiator can also be preferably used, such as 1-[4-(phenylthio)phenyl]-1,2-octanedione 2-(o-benzoyloxime), 1-[9-ethyl-6-(2-methylbenzoyl)-9H-carbazole-3-yl] ethanone 1-(o-acetyloxime).

Some embodiments use, as the active energy ray irradiation radical precursor, a photopolymerization initiator less susceptible to thermal decomposition or thermal radical formation. For instance, as the photopolymerization initiator,

a heat-resistant photopolymerization initiator having a 10% weight loss temperature of 200 °C or higher is used. With the use of such a heat-resistant photopolymerization initiator, even when exposed to a high temperature before curing, the PSA layer can obtain an increased elastic modulus upon a curing treatment by active energy rays. It is noted that the 10% weight loss temperature refers to the surrounding temperature at which the weight of a photopolymerization initiator decreases by 10 % by weight from the initial weight before heating (i.e. the weight of the photopolymerization initiator is 90 % by weight of the initial weight before heating) when the photopolymerization initiator is placed under a nitrogen atmosphere and the surrounding temperature is increased from 23 °C to 300 °C at a heating rate of 2 °C/min. The 10% weight loss temperature of the photopolymerization initiator is more preferably 210 °C or higher, or yet more preferably 220 °C or higher. Examples of a photopolymerization initiator having a 10% weight loss temperature in these ranges include product names IRGACURE 369, IRGACURE 379ex, IRGACURE 819, IRGACURE OXE2 and IRGACURE 127 available from BASF Corporation; product names ESACURE one and ESACURE 1001m available from Lamberti; product names ADEKA OPTMER N-1414, ADEKA OPTMER N-1606 and ADEKA OPTMER N-1717 available from ADEKA Corporation.

When the PSA layer disclosed herein includes a radical precursor, the addition method is not particularly limited. For instance, it is preferably added and mixed in the PSA composition, typically in a solution containing a polymer (fully polymerized polymer). In this method, the radical precursor (favorably an active energy ray irradiation radical precursor) can be added along with other additives (e.g. crosslinking agent, etc.) to the composition. In an alternative method, a polymerization initiator capable of serving as a radical precursor is added during polymerization (polymer synthesis). In this method, the polymerization initiator is added so that a prescribed amount will remain even after the polymerization. The amount of remaining polymerization initiator (the abundance of radical precursor) can be adjusted not only by the (initial) amount of polymerization initiator added, but also through polymerization conditions as well as drying and curing conditions during PSA layer formation, etc.

When the PSA layer disclosed herein comprises a radical precursor, the radical precursor content (amount added) can be suitably selected in accordance with the curing conditions, etc., without particular limitations. From the standpoint of precisely carrying out the curing reaction, the radical precursor content of the PSA layer is suitably about 0.01 % by weight or higher (e.g. about 0.1 % by weight or higher, typically about 0.5 % by weight or higher), preferably about 1 % by weight or higher, more preferably about 1.5 % by weight or higher, or yet more preferably about 2 % by weight or higher. The maximum radical precursor content is not particularly limited and is suitably about 10 % by weight or lower (e.g. about 8 % by weight or lower, typically about 5 % by weight or lower).

(Polymer)

The PSA layer disclosed herein may comprise, as the polymer (typically base polymer), one, two or more species among various polymers that can be used in the field of PSA and adhesives, such as acrylic polymers, rubber-based polymers (e.g. natural rubber, chloroprene rubber, styrene-butadiene rubber, nitrile rubber, etc.), polyester, urethane-based polymers, polyether, silicone-based polymers, polyamides, fluoropolymers, ethylene-vinyl acetate-based polymers, epoxy-based resins, vinyl chloride-based polymers, cyanoacrylate-based polymers, cellulose-based polymers (nitrocellulose-based polymers, etc.), phenol resins, polyimides, polyolefins, styrene-based polymers, polyvinyl acetate, polyvinyl alcohol, polyvinyl acetal, polyvinyl pyrrolidone, polyvinyl butyral, polybenzimidazole, melamine resins, urea resins and resorcinol-based polymers. From the standpoint of the adhesion, cost and so on, acrylic polymers, rubber-based polymers, polyester, urethane-based polymers, polyether, silicone-based polymers, polyamides and fluoropolymers are preferable; acrylic polymers and rubber-based polymers are more preferable; and acrylic polymers are particularly preferable.

It is noted that the "base polymer" of a PSA layer refers to the primary component of the polymer in the PSA layer; other than this, it is not at all limited in interpretation. The polymer is preferably a rubber-like polymer that exhibits rubber elasticity in a temperature range around room temperature. As used herein, the "primary component" refers to the component contained in an amount greater than 50 % by weight unless otherwise informed.

A preferable example of the acrylic polymer is a polymer of a starting monomer mixture that comprises an alkyl (meth)acrylate as the primary monomer and may further comprise a secondary monomer that is copolymerizable with the primary monomer. As used herein, the primary monomer refers to a component accounting for more than 50 % (by weight) of the monomer composition in the starting monomer mixture.

It is noted that the term "acrylic polymer" refers to a polymer that comprises, as a monomeric unit forming the polymer, a monomeric unit derived from a monomer having at least one (meth)acryloyl group per molecule. Hereinafter, a monomer having at least one (meth)acryloyl group per molecule is also called an "acrylic monomer." The acrylic polymer herein is defined as a polymer comprising a monomeric unit derived from an acrylic monomer. Typical examples of the acrylic polymer include an acrylic polymer whose monomer composition has more than 50 % acrylic monomer by weight.

The term "(meth)acryloyl group" comprehensively refers to acryloyl group and methacryloyl group. Similarly,

the "(meth)acrylate" comprehensively refers to acrylate and methacrylate; and the "(meth)acryl" acryl and methacryl.

As the alkyl (meth)acrylate, for instance, a compound represented by the following formula (2) can be preferably used:

$$CH_2=C(R^1)COOR^2 \qquad (2)$$

Here, $R^1$ in the formula (2) is a hydrogen atom or a methyl group. $R^2$ is an acyclic alkyl group having 1 to 20 carbon atoms (hereinafter, such a range of the number of carbon atoms may be indicated as "$C_{1-20}$"). From the standpoint of the PSA layer's storage elastic modulus, etc., an alkyl (meth)acrylate wherein $R^2$ is a $C_{1-14}$ (e.g. $C_{1-12}$) acyclic alkyl group is preferable, and an alkyl acrylate wherein $R^1$ is a hydrogen atom and $R^2$ is a $C_{1-20}$ (e.g. $C_{1-14}$, typically $C_{1-12}$) acyclic alkyl group is more preferable.

Examples of an acyclic alkyl (meth)acrylate with $R^2$ being a $C_{1-20}$ alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. These alkyl (meth)acrylates can be used solely as one species or in a combination of two or more species. Preferable alkyl (meth)acrylates include ethyl acrylate (EA), n-butyl acrylate (BA), 2-ethylhexyl acrylate (2EHA) and lauryl acrylate (LA).

In some preferable embodiments, the alkyl (meth)acrylate includes an alkyl (meth)acrylate A1 whose alkyl group has 9 or fewer carbon atoms (i.e. an alkyl (meth)acrylate wherein $R^2$ is a $C_{1-9}$ alkyl group). According to such an embodiment where the side-chain alkyl group has a limited length, a high cohesive strength capable of greatly preventing adhesive transfer tends to be obtained. For instance, in an embodiment having carbon-carbon double bonds in side chains (typically at side-chain termini) of the polymer, with the limited length of the side-chain alkyl group, the reaction of carbon-carbon double bonds may smoothly proceed during the curing treatment. In addition, with the limited length of the side-chain alkyl group, PSA comprising the polymer obtained from polymerization of the monomer is likely to exhibit excellent bonding strength to a polar adherend such as metal.

The ratio of alkyl (meth)acrylate A1 in all the monomers is suitably about 10 % by weight or higher. From the standpoint of preferably obtaining the effect of alkyl (meth)acrylate A1, it is preferably about 20 % by weight or higher, more preferably about 40 % by weight or higher, yet more preferably about 55 % by weight or higher, particularly preferably about 65 % by weight or higher, possibly, for instance, about 75 % by weight or higher, about 80 % by weight or higher, about 85 % by weight or higher, about 90 % by weight or higher, or even about 95 % by weight or higher. The maximum ratio of alkyl (meth)acrylate A1 of all the monomers is not particularly limited. It is suitably 99.5 % by weight or lower (e.g. 99 % by weight or lower). In an embodiment incorporating a reactive group for curing or a functional group serving as a crosslinking site into the polymer, it is preferably about 95 % by weight or lower, more preferably about 90 % by weight or lower, or yet more preferably about 85 % by weight or lower (e.g. about 75 % by weight or lower).

The ratio of alkyl (meth)acrylate A1 in the entire alkyl (meth)acrylate as the primary monomer is suitably about 50 % by weight or higher. From the standpoint of preferably obtaining the effect of alkyl (meth)acrylate A1, it is preferably about 70 % by weight or higher, more preferably about 80 % by weight or higher, yet more preferably about 90 % by weight or higher, particularly preferably about 95 % by weight or higher, or possibly, for instance, about 99 % to 100 % by weight.

In some preferable embodiments, the alkyl (meth)acrylate A1 includes an alkyl (meth)acrylate A3 whose alkyl group has 8 or fewer carbon atoms. PSA comprising a polymer obtained by polymerization of monomers including the alkyl (meth)acrylate A3 is likely to exhibit excellent bonding strength to polar adherends such as metals and the reaction by the curing treatment may preferably proceed. From such a standpoint, the alkyl group's number of carbon atoms in alkyl (meth)acrylate A3 is suitably 7 or lower (typically below 7), preferably 6 or lower, more preferably 4 or lower, or yet more preferably 2 or lower. From the standpoint of the adhesion to adherends, the alkyl group's number of carbon atoms in alkyl (meth)acrylate A3 is preferably 2 or higher.

The ratio of alkyl (meth)acrylate A3 in all the monomers is suitably about 10 % by weight or higher. From the standpoint of preferably obtaining the effect of alkyl (meth)acrylate A3, it is preferably about 20 % by weight or higher, more preferably about 30 % by weight or higher, yet more preferably about 40 % by weight or higher, particularly preferably about 50 % by weight or higher, possibly, for instance, 60 % by weight or higher, about 70 % by weight or higher, about 80 % by weight or higher, or even about 90 % by weight or higher. The maximum ratio of alkyl (meth)acrylate A3 in all the monomers is not particularly limited. It is suitably 99 % by weight or lower (e.g. 90 % by weight or lower). In an embodiment incorporating a reactive group for curing or a functional group serving as a crosslinking site into the polymer, it is preferably about 80 % by weight or lower, more preferably about 70 % by weight or lower, or yet more preferably about 60 % by weight or lower.

The ratio of alkyl (meth)acrylate A3 in the entire alkyl (meth)acrylate as the primary monomer is suitably about 5 % by weight or higher. From the standpoint of preferably obtaining the effect of alkyl (meth)acrylate A3, it is preferably about 20 % by weight or higher, more preferably about 35 % by weight or higher, yet more preferably about 45 % by weight or higher, particularly preferably about 55 % by weight or higher, possibly, for instance, about 65 % by weight or higher, about 75 % by weight or higher, or even about 85 % by weight or higher (e.g. about 90 % by weight or higher). The maximum ratio of alkyl (meth)acrylate A3 in the entire alkyl (meth)acrylate is 100 % by weight, or suitably, for instance, about 95 % by weight or lower. When the alkyl (meth)acrylate A2 described later is included, from the standpoint of preferably obtaining its effect, it is preferably about 90 % by weight or lower, more preferably about 85 % by weight or lower, possibly, for instance, about 75 % by weight or lower, about 60 % by weight or lower, about 45 % by weight or lower, about 30 % by weight or lower, or even about 15 % by weight or lower.

In some embodiments, the alkyl (meth)acrylate comprises an alkyl (meth)acrylate A2 whose alkyl group has 7 or more carbon atoms, as the alkyl (meth)acrylate A1 or A3, or as a monomer different from the alkyl (meth)acrylates A1 and A3. For instance, the use of alkyl (meth)acrylate A2 readily brings about a decrease in post-curing adhesive strength, likely resulting in superior adherend separability and adhesive transfer prevention. The alkyl group's number of carbon atoms in alkyl (meth)acrylate A2 is preferably 8 or higher, or possibly, for instance, 9 or higher. From the standpoint of the adhesive properties such as bonding strength, the alkyl group's number of carbon atoms in alkyl (meth)acrylate A2 is preferably 14 or lower, more preferably 12 or lower, or yet more preferably 10 or lower (typically 9 or lower).

The ratio of alkyl (meth)acrylate A2 in the entire alkyl (meth)acrylate as the primary monomer is suitably about 1 % by weight or higher. From the standpoint of preferably obtaining the effect of alkyl (meth)acrylate A2, it is preferably about 5 % by weight or higher, more preferably about 15 % by weight or higher, yet more preferably about 25 % by weight or higher, particularly preferably about 35 % by weight or higher, possibly, for instance, about 45 % by weight or higher, about 60 % by weight or higher, or even about 80 % by weight or higher (e.g. about 90 % by weight or higher). The maximum ratio of alkyl (meth)acrylate A2 in the entire alkyl (meth)acrylate is 100 % by weight, or suitably, for instance, about 90 % by weight or lower. When alkyl (meth)acrylate A2 is included, from the standpoint of preferably obtaining its effect, it is preferably about 70 % by weight or lower, more preferably about 60 % by weight or lower, possibly, for instance, about 45 % by weight or lower, about 30 % by weight or lower, about 20 % by weight or lower, about 10 % by weight or lower, or even about 5 % by weight or lower.

The ratio of primary monomer in all the monomers is preferably about 55 % by weight or higher, or more preferably about 60 % by weight or higher (e.g. about 65 % by weight or higher). The maximum primary monomer content is not particularly limited. It is suitably 99.5 % by weight or lower (e.g. 99 % by weight or lower). In an embodiment incorporating a reactive group for curing or a functional group serving as a crosslinking site into the polymer, it is preferably about 95 % by weight or lower, more preferably about 90 % by weight or lower, or yet more preferably about 85 % by weight or lower (e.g. about 75 % by weight or lower).

The secondary monomer copolymerizable with the alkyl (meth)acrylate being the primary monomer may be useful for introducing crosslinking points in the acrylic polymer or increasing the cohesive strength of the acrylic polymer. In the art disclosed herein, it is preferable to use, as a secondary monomer, a monomer having a functional group A capable of reacting with the functional group B of the carbon-carbon double bond-containing monomer described later. As the secondary monomer, for instance, the following functional group-containing monomers can be used one species solely or a combination of two or more species:

Carboxy group-containing monomers: for example, ethylenic unsaturated monocarboxylic acids such as acrylic acid (AA), methacrylic acid (MAA) and crotonic acid; ethylenic unsaturated dicarboxylic acids such as maleic acid, itaconic acid and citraconic acid as well as anhydrides thereof (maleic acid anhydride, itaconic acid anhydride, etc.).

Hydroxy group-containing monomers: for example, hydroxyalkyl (meth)acrylates such as 2-hydroxyethyl (meth)acrylate, 2-hydroxypropyl (meth)acrylate, 3-hydroxypropyl (meth)acrylate and 4-hydroxybutyl (meth)acrylate; unsaturated alcohols such as vinyl alcohol and allyl alcohol; and ether-based compounds such as 2-hydroxyethyl vinyl ether, 4-hydroxybutyl vinyl ether and diethylene glycol monovinyl ether.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide and N-butoxymethyl(meth)acrylamide.

Amino group-containing monomers: for example, aminoethyl (meth)acrylate, N,N-dimethylaminoethyl (meth)acrylate and t-butylaminoethyl (meth)acrylate.

Epoxy group-containing monomers: for example, glycidyl (meth)acrylate, methylglycidyl (meth)acrylate and allyl glycidyl ether.

Cyano group-containing monomers: for example, acrylonitrile and methacrylonitrile.

Keto group-containing monomers: for example, diacetone (meth)acrylamide, diacetone (meth)acrylate, vinyl methyl ketone, vinyl ethyl ketone, allyl acetoacetate and vinyl acetoacetate.

Monomers having nitrogen atom-containing rings (N-containing heterocyclic monomers): for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam and N-(meth)acryloyl morpholine.
Alkoxysilyl group-containing monomers: for example, 3-(meth)acryloxypropyltrimethoxysilane, 3-(meth)acryloxypropyltriethoxysilane, 3-(meth)aciyloxypropylmethyldimethoxysilane and 3-(meth)acryloxypropylmethyldiethoxysilane.
Isocyanate group-containing monomers: (meth)acryloyl isocyanate, 2-(meth)acryloyloxyethyl isocyanate and m-isopropenyl-$\alpha$,$\alpha$-dimethylbenzyl isocyanate.

As the secondary monomer, from the standpoint of enhancing the cohesion, a hydroxy group-containing monomer is preferably used. The hydroxy group-containing monomer is more preferably a hydroxyalkyl (meth)acrylate such as 2-hydroxyethyl acrylate (HEA) and 4-hydroxybutyl acrylate (4HBA).

In the art disclosed herein, from the standpoint of reducing the post-curing adhesive strength, as the secondary monomer, it is desirable to use a carboxy group-containing monomer (e.g. AA, MAA) and a N-containing heterocyclic monomer (e.g. N-acryloylmorpholine) in limited amounts. In some embodiments, of all the monomers for preparing the acrylic polymer, the ratio of carboxy group-containing monomer is below 10 % by weight, preferably below 5 % by weight, more preferably below 1 % by weight, or yet more preferably below 0.1 % by weight. The art disclosed herein can be preferably implemented in an embodiment where the secondary monomers used for acrylic polymer preparation is essentially free of a carboxy group-containing monomer. In some embodiments, of all the monomers for preparing the acrylic polymer, the ratio of N-containing heterocyclic monomer is below 10 % by weight, preferably below 5 % by weight, more preferably below 1 % by weight, or yet more preferably below 0.1 % by weight. The art disclosed herein can be preferably implemented in an embodiment where the secondary monomers used for acrylic polymer preparation is essentially free of a N-containing heterocyclic monomer.

The amount of secondary monomer can be suitably selected to obtain desirable cohesive strength and is not particularly limited. In typical, from the standpoint of combining well-balanced cohesive strength and other properties (e.g. adhesiveness), of all the monomers for the acrylic polymer, the amount of secondary monomer (preferably a hydroxy group-containing monomer) is suitably 0.1 % by weight or higher, or preferably 0.3 % by weight or higher (e.g. 1 % by weight or higher). Of all the monomers for the acrylic polymer, the amount of secondary monomer (preferably a hydroxy group-containing monomer) is suitably 30 % by weight or lower, or preferably 10 % by weight or lower (e.g. 5 % by weight or lower).

When using a C=C-containing acrylic polymer as the polymer, it is preferable to use, as the secondary monomer, a secondary monomer having a functional group (functional group A) reactive towards the functional group (functional group B) of a C=C-containing compound described later. In such a case, the species of secondary monomer is decided in accordance with the species of compound. As the functional group A-containing secondary monomer, for instance, a carboxy group-containing monomer, epoxy group-containing monomer, hydroxy group-containing monomer and isocyanate group-containing monomer are preferable. A hydroxy group-containing monomer is particularly preferable. When using a hydroxy group-containing monomer as the secondary monomer, the acrylic polymer will have a hydroxy group. On the other hand, when using an isocyanate group-containing monomer as the C=C-containing compound, the acrylic polymer's hydroxy group reacts with the compound's isocyanate group to incorporate a carbon-carbon double bond derived from the compound into the acrylic polymer.

When using a secondary monomer for reaction with the C=C-containing compound, from the standpoint of the increased elastic modulus of the post-curing PSA layer, of all the monomers, the amount of secondary monomer (preferably a hydroxy group-containing monomer) is suitably about 1 % by weight or higher, preferably about 5 % by weight or higher, more preferably about 10 % by weight or higher, or yet more preferably about 12 % by weight or higher (e.g. about 14 % by weight or higher). From the standpoint of well retaining the adhesive properties such as adhesiveness, of all the monomers, the amount of secondary monomer is suitably about 40 % by weight or lower, preferably about 30 % by weight or lower, more preferably about 20 % by weight or lower, or possibly, for instance, about 15 % by weight or lower.

For the purpose of increasing the cohesive strength of the acrylic polymer, other co-monomer(s) besides the aforementioned secondary monomers can be used. Examples of such co-monomers include vinyl ester-based monomers such as vinyl acetate and vinyl propionate; aromatic vinyl compounds such as styrene, substituted styrenes ($\alpha$-methylstyrene, etc.) and vinyl toluene; cycloalkyl (meth)acrylates such as cyclohexyl (meth)acrylate, cyclopentyl di(meth)acrylate and isobornyl (meth)acrylate; aromatic ring-containing (meth)acrylates such as aryl (meth)acrylate (e.g. phenyl (meth)acrylate), aryloxyalkyl (meth)acrylate (e.g. phenoxyethyl (meth)acrylate) and arylalkyl (meth)acrylate (e.g. benzyl (meth)acrylate); olefinic monomers such as ethylene, propylene, isoprene, butadiene and isobutylene; chlorine-containing monomers such as vinyl chloride and vinylidene chloride; alkoxy group-containing monomers such as methoxyethyl (meth)acrylate and ethoxyethyl (meth)acrylate; vinyl ether-based monomers such as methyl vinyl ether and ethyl vinyl ether. For the other copolymerizable components (co-monomers) except for these secondary monomers, solely one

species or a combination of two or more species can be used. The amount of other comonomer can be suitably selected in accordance with the purpose and application without particular limitations. For instance, of all the monomers for the acrylic polymer, it is preferably 20 % by weight or lower (e.g. 2 % to 20 % by weight, typically 3 % to 10 % by weight).

In addition, for purposes such as crosslinking treatment of the acrylic polymer, a polyfunctional monomer can be used as a copolymerizable component. As the polyfunctional monomer, one, two or more species can be used among hexanediol di(meth)acrylate, polyethylene glycol di(meth)acrylate, polypropylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, etc. The amount of polyfunctional monomer can be suitably selected in accordance with the purpose and application without particular limitations. For instance, of the all the monomers for the acrylic polymer, it is preferably about 30 % by weight or lower (e.g. 20 % by weight or lower, typically 10 % by weight or lower).

The method for obtaining the acrylic polymer that has the monomer composition is not particularly limited. Various polymerization methods known as synthetic means for acrylic polymers can be suitably employed, such as solution polymerization, emulsion polymerization, bulk polymerization and suspension polymerization. For instance, solution polymerization can be preferably used. When carrying out solution polymerization, a monomer supply method can be suitably employed among all-at-once supply method where all starting monomers are supplied at once, continuous (dropwise) supply method, portion-wise (dropwise) supply method, etc. As the solvent used for solution polymerization, a suitable species can be selected among known or conventional organic solvents such as toluene and ethyl acetate. The polymerization temperature can be suitably selected in accordance with the monomer species, the solvent species, and the polymerization initiator species used, etc. For instance, it can be about 20 °C to 120 °C (typically 40 °C to 80 °C).

The initiator used for the polymerization can be suitably selected in accordance with the type of polymerization method among known or conventional polymerization initiators. Examples of peroxide-based initiators include organic peroxides such as diacyl peroxide, peroxyester, peroxydicarbonate, monoperoxycarbonate, peroxyketal, dialkyl peroxide, hydroperoxide and ketone peroxide; and hydrogen peroxide. The following polymerization initiators can also be used: azo-based initiators such as 2,2'-azobisisobutyronitrile (AIBN); persulfates such as potassium persulfate and ammonium persulfate; substituted ethane-based compounds such as phenyl-substituted ethane; aromatic carbonyl compounds; redox-based compounds (redox-based initiators) as a combination of a peroxide and a reducing agent; and the like. Examples of redox-based initiators include a combination of a peroxide and ascorbic acid (combination of hydrogen peroxide water and ascorbic acid, etc.), a combination of a peroxide and an iron(II) salt (combination of hydrogen peroxide water and an iron(II) salt, etc.) and a combination of a persulfate and sodium hydrogen peroxide. A polymerization initiator exemplified as a radical precursor can also be used. The polymerization initiators can be used solely as one species or in a combination of two or more species. In particular, peroxide-based initiators are preferable; diacyl peroxides and peroxy esters are more preferable; and dibenzoyl peroxide (BPO), 1,1,3,3-tetramethylbutylperoxy-2-ethylhexanoate and t-hexylperoxy-2-ethylhexanoate are yet more preferable.

The polymerization initiator can be used in a usual amount. For instance, relative to 100 parts by weight of all the monomers, it can be selected from the range of about 0.005 part to 1 part by weight (typically 0.01 part to 1 part by weight). When using a polymerization initiator as the radical precursor, the amount of polymerization initiator used can be selected in view of this.

(C=C-containing acrylic polymer)

From the standpoint of the ease of increasing the post-heating/curing PSA layer elastic modulus, the acrylic polymer disclosed herein is preferably a C=C-containing acrylic polymer. The acrylic polymer is also advantageous in that the starting monomers can be selected highly freely and the physical properties can be easily controlled. It is noted that the method for using the C=C-containing acrylic polymer corresponds to the method (1) for incorporating the presence of carbon-carbon double bonds in the PSA layer.

The C=C incorporation method in acrylic polymer is not particularly limited. For instance, it is preferable to employ a method that allows a functional group B- and C=C-containing compound to undergo reaction (typically condensation, addition reaction) without losing C=C bonds, with the functional group B being reactive towards a functional group (functional group A) copolymerized and incorporated in the acrylic polymer. Examples of the combination of functional groups A and B include a carboxy group and epoxy group combination, a carboxy group and aziridine group combination, and a hydroxy group and isocyanate group combination. In particular, from the standpoint of the ease of reaction tracing, the hydroxy group and isocyanate group combination is preferable. From the standpoint of the polymer design, etc., a combination of an acrylic polymer having a hydroxy group and the compound having an isocyanate group is particularly preferable.

As described above, the C=C-containing compound may have a functional group B reactive towards the functional group A. Favorable examples of such a compound include the isocyanate group-containing monomers (isocyanate group-containing compounds) exemplified as the secondary monomer possibly used in the acrylic polymer synthesis.

Among them, 2-(meth)acryloyloxyethyl isocyanate is more preferable. The isocyanate group in the C=C- and isocyanate group-containing compound reacts with the hydroxy group in the acrylic polymer to form a linkage (typically a urethane linkage), whereby a C=C-containing acrylic polymer is favorably obtained.

From the standpoint of the reactivity towards a hydroxy group as the functional group A, the isocyanate group-containing monomer can be added in an amount suitably selected in a range that satisfies the aforementioned molar ratio $M_A/M_B$. For instance, to 100 parts by weight of a hydroxy group-containing acrylic polymer (typically before C=C incorporation), the amount of isocyanate group-containing monomer added is suitably about 1 part by weight or greater (e.g. 5 parts by weight or greater, typically 10 parts by weight or greater). From the standpoint of increasing the post-heating/curing PSA layer elastic modulus, it is preferably about 15 parts by weight or greater, more preferably about 18 parts by weight or greater, or yet more preferably about 21 parts by weight or greater. The maximum amount of isocyanate group-containing monomer added is not particularly limited. To 100 parts by weight of the hydroxy group-containing acrylic polymer, it is suitably about 40 parts by weight or less, preferably about 35 parts by weight or less, more preferably about 30 parts by weight or less, or possibly, for instance, about 25 parts by weight or less.

Of all the monomers constituting the polymer (typically, an acrylic polymer in which an isocyanate group-containing monomer is incorporated) in the PSA layer, the amount of isocyanate group-containing monomer added is suitably about 1 % by weight or greater (about 3 % by weight or greater). From the standpoint of increasing the post-heating/curing PSA layer elastic modulus, it is preferably about 5 % by weight or greater, more preferably about 10 % by weight or greater, yet more preferably about 15 % by weight or greater, or possibly, for instance, about 18 % by weight or greater. The maximum amount of isocyanate group-containing monomer is not particularly limited. From the standpoint of the adhesive properties such as bonding strength, it is suitably about 40 % by weight or less, preferably about 35 % by weight or less, more preferably about 30 % by weight or less, yet more preferably about 25 % by weight or less, or possibly, for instance, about 20 % by weight or less.

The polymer (favorably an acrylic polymer) in the art disclosed herein is not particularly limited in weight average molecular weight (Mw). From the standpoint of preventing adhesive transfer to the adherend surface during removal, the Mw is suitably about $10 \times 10^4$ or higher, preferably about $20 \times 10^4$ or higher, or more preferably about $30 \times 10^4$ or higher. On the other hand, from the standpoint of enhancing the tightness of adhesion to the adherend, the Mw is suitably about $500 \times 10^4$ or lower, preferably about $100 \times 10^4$ or lower, or more preferably about $70 \times 10^4$ or lower. As used herein, the Mw refers to a value obtained by GPC based on standard polystyrenes.

(C=C-containing monomer/oligomer)

The art disclosed herein can also be preferably implemented in an embodiment having a PSA layer comprising a C=C-containing monomer/oligomer. As the monomer/oligomer, aforementioned species can be preferably used. In an embodiment using an acrylic polymer as the polymer, one, two or more species are preferably used among the aforementioned (meth)acryloyl group-containing compounds and multimers (e.g. dimer to pentamer) of the (meth)acryloyl group-containing compounds. The multimer can be, for instance, a polyfunctional (typically, bifunctional to pentafunctional) compound. It is noted that the method for using the C=C-containing monomer/oligomer corresponds to the method (2) for incorporating the presence of carbon-carbon double bonds in the PSA layer.

(Other polymers)

When the PSA layer disclosed herein comprises an acrylic polymer, it may further comprise a non-acrylic polymer in addition to the acrylic polymer. Favorable examples of the non-acrylic polymer include the non-acrylic polymers among the various polymers exemplified as polymers possibly included in the PSA layer. Such a polymer may have a carbon-carbon double bond. When the PSA layer disclosed herein comprises an acrylic polymer as well as a non-acrylic polymer (i.e. a polymer other than the acrylic polymer), relative to 100 parts by weight of the acrylic polymer, the non-acrylic polymer content is suitably 100 parts by weight or lower, preferably 50 parts by weight or lower, more preferably 30 parts by weight or lower, or yet more preferably 10 parts by weight or lower. Relative to 100 parts by weight of the acrylic polymer, the non-acrylic polymer content can be 5 parts by weight or less, or even 1 part by weight or less. For instance, the art disclosed herein can be preferably implemented in an embodiment where the acrylic polymer accounts for 99.5 % to 100 % by weight of the polymer in the PSA layer.

(Crosslinking Agent)

From the standpoint of enhancing the PSA layer's cohesion, the PSA composition used for forming the PSA layer preferably comprises a crosslinking agent in addition to the polymer. The type of crosslinking agent is not particularly limited. A suitable species can be selected and used among, for instance, isocyanate-based crosslinking agents, epoxy-based crosslinking agents, oxazoline-based crosslinking agents, aziridine-based crosslinking agents, melamine-based

crosslinking agents, peroxide-based crosslinking agents, urea-based crosslinking agents, metal alkoxide-based crosslinking agents, metal chelate-based crosslinking agents, metal salt-based crosslinking agents, carbodiimidebased crosslinking agents and amine-based crosslinking agents. These crosslinking agents can be used solely as one species or in a combination of two or more species. In particular, isocyanate-based crosslinking agents and metal chelate-based crosslinking agents are preferable.

As an example of the isocyanate-based crosslinking agent, a bifunctional or higher polyfunctional isocyanate compound can be used. Examples include aromatic isocyanates such as tolylene diisocyanates, xylylene diisocyanate, polymethylene polyphenyl diisocyanate, tris(p-isocyanatophenyl)thiophosphate, and diphenylmethane diisocyanate; alicyclic isocyanates such as isophorone diisocyanate; and aliphatic isocyanates such as hexamethylene diisocyanate. Commercial products include isocyanate adducts such as trimethylolpropane/tolylene diisocyanate trimer adduct (trade name CORONATE L available from Tosoh Corporation), trimethylolpropane/hexamethylene diisocyanate trimer adduct (trade name CORONATE HL available from Tosoh Corporation) and hexamethylene diisocyanate isocyanurate (trade name CORONATE HX available from Tosoh Corporation).

The metal chelate-based crosslinking agent may typically have a structure with a polyvalent metal covalently or coordinatively bonded to an organic compound. Examples of the polyvalent metal atom include Al, Zr, Co, Cu, Fe, Ni, V, Zn, In, Ca, Mg, Mn, Y, Ce, Ba, Mo, La, Sn, and Ti. In particular, Al, Zr and Ti are preferable. Examples of the organic compound include alkyl esters, alcohol compounds, carboxylic acid compounds, ether compounds, and ketone compounds. The metal chelate-based crosslinking agent can typically be a compound having a structure in which an oxygen atom in the organic compound is bonded (covalently or coordinatively) to the polyvalent metal.

The crosslinking agent content in the PSA composition is not particularly limited. From the standpoint of combining cohesion and other properties (e.g. bonding strength), the amount of crosslinking agent added to 100 parts by weight of the polymer (e.g. the acrylic polymer) in the PSA composition is suitably about 0.005 part by weight or greater, preferably about 0.01 part by weight or greater, or more preferably about 0.05 part by weight or greater (e.g. about 0.1 part by weight or greater), and suitably about 10 parts by weight or less. From the standpoint of adhesion to adherends, it is preferably about 5 parts by weight or less, more preferably about 2 parts by weight or less, yet more preferably about 1 part by weight or less, or particularly preferably about 0.5 part by weight or less.

In an embodiment using an isocyanate-based crosslinking agent as the crosslinking agent, the amount of isocyanate-based crosslinking agent in the PSA composition relative to 100 parts by weight of the polymer (favorably an acrylic polymer) in the PSA composition is suitably about 10 parts by weight or less. From the standpoint of fully obtain bonding strength to adherends, it is preferably less than 3 parts by weight, more preferably less than 1 part by weight, yet more preferably less than 0.5 part by weight, or particularly preferably about 0.4 part by weight or less (e.g. about 0.3 part by weight or less, typically about 0.2 part by weight or less). The minimum amount of isocyanate-based crosslinking agent added in the PSA composition is not particularly limited. It is suitably about 0.005 part by weight or greater to 100 parts by weight of the polymer (favorably, an acrylic polymer) in the PSA composition. From the standpoint of obtaining good cohesive strength, it is preferably about 0.01 part by weight or greater, or more preferably about 0.05 part by weight or greater (e.g. about 0.1 part by weight or greater).

(Radical scavenger)

From the standpoint of the storage stability, the PSA layer disclosed herein may include a radical scavenger such as antioxidant. The radical scavenger is literally an agent serving to scavenge radicals in the PSA layer. Thus, in the pre-curing state, it may inhibit addition of radicals to carbon-carbon double bonds in the PSA layer.

While the concept of radical scavenger disclosed herein may encompass anti-aging agent and photo-stabilizer, a typical example thereof is antioxidant. Examples of the antioxidant include various heretofore known antioxidants such as phenolic antioxidant, phosphorus-based (phosphite-based) antioxidant, sulfur-based antioxidant and amine-based antioxidant. For the antioxidant, solely one species or a combination of two or more species can be used.

Examples of the phenolic antioxidant include monophenolic antioxidants such as 2,6-di-t-butyl-4-methylphenol and 2,6-di-tert-butyl-4-ethylphenol; bisphenolic antioxidants such as 2,2'-methylenebis(4-methyl-6-t-butylphenol), 2,2'-methylenebis(4-ethyl-6-t-butylphenol), 4,4'-butylidenebis(3-methyl-6-t-butylphenol) and 4,4'-thiobis(3-methyl-6-t-butylphenol); and high-molecular-weight phenolic antioxidants such as 1,3,5-trimethyl-2,4,6-tris(3,5-di-t-butyl)-4-hydroxybenzyl)benzene, tetrakis-[methylene-3-(3',5'-di-t-butyl-4'-hydroxyphenyl)propionate]methane and 1,1,3-tris(2-methyl- 4-hydroxy-5-t-butylphenyl)butane

The phenolic antioxidant can be a hindered phenolic antioxidant. Examples of the hindered phenolic antioxidant include pentaerythritol tetrakis[3-(3,5-di-tert-butyl-4-hydroxyphenyl) propionate], octadecyl-3-(3,5-di-tert-butyl-4-hydroxyphenyl)propionate, 4,6-bis(dodecylthiomethyl)-o-cresol, triethylene glycol-bis[3-(3-tert-butyl-5-methyl-4-hydroxyphenyl)propionate, bis (2,2,6,6-tetramethyl-4-piperidyl)sebacate, and polycondensation product of dimethyl succinate and 4-hydroxy-2,2,6,6-tetramethyl-1-piperidine ethanol (dimethyl- 1-(2-hydroxyethyl)-4-hydroxy-2,2,6,6-tetramethylpiperidine succinate polycondensate).

Examples of the phosphorus-based antioxidant include tris(2,4-di-t-butylphenyl) phosphite, tris(nonylphenyl) phosphite, triphenyl phosphite and distearyl pentaerythritol diphosphite.

Examples of the sulfur-based antioxidant include dilauryl-3,3'-thiodipropionate, dimyristyl-3,3'-thiodipropionate, distearyl-3,3'-thiodipropionate and pentaerythritol tetralaurylthiopropionate.

Examples of the amine-based antioxidant include phenyl-$\alpha$-naphthylamine and diphenylamine.

The art disclosed herein is implemented in an embodiment where carbon-carbon double bonds are present in the PSA layer and can be implemented in an embodiment comprising a radical scavenger. In this embodiment, from the standpoint of smoothly increasing the PSA layer elastic modulus during curing, the radical scavenger is preferably limited in amount added. The amount of radical scavenger (typically an antioxidant) in the PSA layer is suitably about 3 % by weight or lower, preferably about 1 % by weight or less, more preferably about 0.5 % by weight or less, or yet more preferably about 0.3 % by weight or less (typically 0.1 % by weight or less). The PSA layer may be free of a radical scavenger (typically an antioxidant). However, in complete absence of radical scavenger such as antioxidant, oxidation may proceed at room temperature due to the dissolved oxygen and the like in the PSA layer; and therefore, a radical scavenger (typically an antioxidant) is preferably included in a suitable amount. From such a standpoint, the radical scavenger content of the PSA layer is preferably 0.001 % by weight or higher (e.g. 0.005 % by weight or higher, typically 0.01 % by weight or higher).

(Other additives)

The PSA composition may include a tackifier and a silane coupling agent. In the art disclosed herein, from the standpoint of the post-curing removability, the tackifier content of the PSA layer is suitably below 10 % by weight (e.g. below about 3 % by weight, or even below 1 % by weight). It can be preferably implemented in an embodiment where the PSA layer is essentially free of a tackifier. It is noted that a silane coupling agent may be added for purposes such as to improve the adhesion to an adherend (typically glass).

The PSA composition may comprise, as necessary, various additives generally known in the field of PSA compositions, such as leveling agent, crosslinking accelerator, plasticizer, softener, filler, colorant (pigment, dye, etc.), anti-static agent, UV absorber and photo-stabilizing agent. With respect to these various additives, heretofore known species can be used by typical methods. Because these additives do not characterize the present invention in particular, details are omitted.

In some preferable embodiments, the PSA composition may have a composition in which the polymer (typically base polymer) content accounts for about 90 % by weight or higher of the total weight of the PSA (non-volatiles of the PSA composition) (i.e. the weight of the PSA layer formed of the PSA). This can preferably bring about an increase in elastic modulus of the PSA layer by curing. From such a standpoint, of the total weight of the PSA layer, the polymer content is preferably about 95 % by weight or higher, more preferably about 97 % by weight or higher, yet more preferably about 98 % by weight or higher, or possibly about 99 % by weight or higher (e.g. 99 % to 100 % by weight). In other words, the amount of non-polymer components (additives, etc.) in the non-volatiles (PSA layer) of the PSA composition is suitably about 10 % by weight or less, preferably about 5 % by weight or less, more preferably about 3 % by weight or less, yet more preferably about 2 % by weight or less, or possibly about 1 % by weight or less.

(Method for forming PSA layer)

The PSA layer disclosed herein may be formed from an aqueous PSA composition, solvent-based PSA composition, hot-melt PSA composition or active energy ray-curable PSA composition. The aqueous PSA composition refers to a PSA composition comprising PSA in a solvent (aqueous solvent) whose primary component is water. As used herein, the concept of aqueous PSA composition may include so-called, a waterdispersed PSA composition (a composition of PSA dispersed in water) and a water-soluble PSA composition (a composition of PSA dissolved in water). The solvent-based PSA composition refers to a PSA composition comprising PSA in an organic solvent. The art disclosed herein can be preferably implemented in an embodiment having a PSA layer formed from a solvent-based PSA composition.

The PSA layer disclosed herein can be formed by a heretofore known method. For instance, it is preferable to employ a method where a PSA composition is provided (typically applied) to a releasable surface (release face) and allowed to dry to form a PSA layer. It is also preferable to use a method (direct method) where a PSA composition is directly provided onto a substrate and allowed to dry to form a PSA layer. In yet another possible method (transfer method), a PSA composition is provided onto a release face and allowed to dry to form a PSA layer on the surface and the PSA layer is transferred to a substrate. As the release face, it is possible to use a release liner surface, a substrate backside subjected to release treatment, etc. The application can be carried out, using a known or conventional coater such as a gravure roll coater and reverse roll coater.

From the standpoint of accelerating the crosslinking reaction, increasing the productivity, etc., the PSA composition is preferably dried with heat. The drying temperature can be, for instance, about 40 °C to 150 °C and is typically preferably about 60 °C to 130 °C. For instance, with respect to drying at such a temperature (e.g. for 5 minutes or less, typically for about 3 minutes), the solvent has evaporated; and this drying treatment is applied to the PSA composition (layer) before the PSA layer is formed and is not considered the curing treatment in the art disclosed herein. Alternatively, after the PSA composition is dried, aging can be carried out for purposes such as adjusting the migration of components within the PSA layer, allowing the crosslinking reaction to proceed, and mitigating the strain that may exist in the substrate and PSA layer. The aging conditions are not particularly limited. For instance, aging is suitably carried out at a temperature of about 25 °C to 70 °C (typically 40 °C to 60 °C) for 10 hours to 120 hours (typically 24 hours to 48 hours).

The thickness of the PSA layer disclosed herein is not particularly limited and can be suitably selected in accordance with the purpose. In typical, the PSA layer has a thickness of suitably about 5 μm to 200 μm. From the standpoint of the sort of tightness of adhesion, it is preferably about 10 μm or greater (e.g. 15 μm or greater, typically 25 μm or greater) and is preferably 150 μm or less, more preferably 100 μm or less, or yet more preferably about 80 μm or less (e.g. 60 μm or less, typically 40 μm or less). When the PSA sheet disclosed herein is a double-faced PSA sheet having a PSA layer on each face of a substrate, the respective PSA layers may have the same thickness or different thicknesses.

<Substrate layer>

In an adhesively single-faced or double-faced substrate-supported PSA sheet, as the substrate (layer) supporting (backing) the PSA layer(s), various types of sheet substrate can be used. As the substrate, it is possible to use a resin film, paper, cloth, rubber sheet, foam sheet, metal foil, a composite thereof, etc. Examples of the resin film include polyolefinic films such as polyethylene (PE), polypropylene (PP), and an ethylenepropylene copolymer; polyester films such as polyethylene terephthalate (PET) and polyethylene naphthalate (PEN); vinyl chloride resin films; vinyl acetate resin films; polyamide resin films; fluororesin films; and cellophane. Other examples of the resin film include resin films formed from one, two or more species of engineering plastics (possibly super engineering plastics) among polyphenylene sulfide-based resins, polysulfone-based resins, polyether sulfone-based resins, polyether ether ketone-based resins, polyarylatebased resins, polyamideimide-based resins, polyimide-based resins, etc. The use of an engineering plastic is preferable in view of the heat resistance. Examples of the paper include Washi paper, kraft paper, glassine paper, high-grade paper, synthetic paper and top-coated paper. Examples of the cloth include woven fabrics and non-woven fabrics formed of one species or a blend of various fibrous substances. Examples of the fibrous substances include cotton, staple fiber, Manila hemp, pulp, rayon, acetate fiber, polyester fiber, polyvinyl alcohol fiber, polyamide fiber and polyolefin fiber. Examples of the rubber sheet include a natural rubber sheet and a butyl rubber sheet. Examples of the foam sheet include a polyurethane foam sheet and a polychloroprene rubber foam sheet. Examples of the metal foil include aluminum foil and copper foil.

A preferable embodiment uses, as the substrate (layer), a resin film that has a prescribed rigidity (strength) and exhibits excellent processability and handling properties. In case of a thin adherend, the use of a highly rigid resin film substrate can prevent deflection of and damage to the adherend during delivery, etc. From a similar standpoint, a polyester film is preferably used as the resin film substrate. The "resin film" here typically refers to a non-porous film and is conceptually distinguished from so-called non-woven fabrics and woven fabrics. The resin film usable as the substrate may have a density of about 0.85 g/cm$^3$ to 1.50 g/cm$^3$ (e.g. 0.90 g/cm$^3$ to 1.20 g/cm$^3$, typically 0.92 g/cm$^3$ to 1.05 g/cm$^3$).

The substrate (e.g. a resin film substrate) may contain various additives as necessary, such as filler (e.g. inorganic filler, organic filler), anti-aging agent, antioxidant, UV absorber, antistatic agent, lubricant, plasticizer, and colorant (e.g. pigment, dye).

Of the substrate layer (e.g. a resin film substrate, rubber sheet substrate, foam sheet substrate), the PSA layer-side surface (the face to which the PSA layer is placed) may be subjected to known or conventional surface treatment such as corona discharge treatment, plasma treatment, UV irradiation, acid treatment, base treatment and primer coating. Such surface treatment may enhance the tightness of adhesion between the substrate and the PSA layer, that is, the PSA layer's anchoring to the substrate.

In some preferable embodiments, a primer layer is provided to the PSA layer side surface of the substrate. In other words, a primer layer can be placed between the substrate layer and the PSA layer. The primer layer-forming material is not particularly limited. One, two or more species can be used among urethane-based (polyisocyanatebased) resins, polyester-based resins, acrylic resins, polyamide-based resins, melamine-based resins, olefinic resins, polystyrene-based resins, epoxy-based resins, phenolic resins, isocyanurate-based resins, polyvinyl acetate-based resins, etc. When the sort of acrylic PSA layer is provided on the resin film substrate, a polyester-based, urethane-based, or acrylic primer layer is preferable. When an acrylic PSA layer is provided on a polyester-based substrate layer such as PET film, a polyester-based primer layer is particularly preferable. The thickness of the primer layer is not particularly limited and can typically be in the range of about 0.1 μm to 10 μm (e.g. 0.1 μm to 3 μm, typically 0.1 μm to 1 μm). The primer layer can be formed, using a known or conventional coater such as a gravure roll coater and reverse roll coater.

When the PSA sheet disclosed herein is an adhesive single-faced PSA sheet having a PSA layer on one face of a substrate layer, the PSA layer-free face (backside) of the substrate layer can be subjected to a release treatment using a release agent (backside treatment agent). The backside treatment agent that can be used in forming the backside treatment layer is not particularly limited. A silicone-based backside treatment agent, fluorine-based backside treatment agent, long-chain alkyl-based backside treatment agent and other known or conventional treatment agents can be used in accordance with the purpose and application.

The thickness of the substrate layer is not particularly limited and can be suitably selected in accordance with the purpose. In general, it can be 1 μm to 800 μm. From the standpoint of the ease of processing, handling, working and so on, the substrate layer's thickness is suitably 2 μm or greater (e.g. 3 μm or greater, typically 5 μm or greater), preferably about 10 μm or greater, more preferably about 25 μm or greater (e.g. 30 μm or greater); and is suitably about 700 μm or less (e.g. 500 μm or less, typically 200 μm or less), preferably about 100 μm or less, or more preferably about 80 μm or less (e.g. about 70 μm or less).

<Release liner>

As the release liner, conventional release paper and the like can be used without particular limitations. For instance, it is possible to use a release liner having a release treatment layer on the surface of a liner substrate such as resin film and paper, the sort of release liner formed from a low-adhesive material such as a fluoropolymer (polytetrafluoroethylene, etc.) and polyolefinic resin (polyethylene, polypropylene, etc.), or the like. The release treatment layer can be formed, for instance, by subjecting the liner substrate to a surface treatment with a release treatment agent such as a silicone-based, long-chain alkyl-based, fluorine-based kinds, and molybdenum sulfide.

Of the PSA sheet (possibly including a PSA layer and a substrate layer, but not including any release liner) disclosed herein, the total thickness is not particularly limited and is suitably in the range of about 5 μm to 1000 μm. In view of the adhesive properties, etc., the PSA sheet preferably has a thickness of about 10 μm to 500 μm (e.g. 15 μm to 300 μm, typically 20 μm to 200 μm). From the standpoint of the handling properties, etc., the PSA sheet's total thickness is more preferably 30 μm or greater (e.g. 50 μm or greater, typically 70 μm or greater).

<Properties of PSA sheet>

The PSA sheet disclosed herein has an initial 180° peel strength (initial adhesive strength) to stainless steel plate of about 1 N/20mm or greater (typically greater than 1.0 N/20mm), determined at a peel angle of 180°, at a speed of 300 mm/min in an environment at 23 °C based on JIS Z 0237:2000. The PSA sheet showing at least the prescribed initial adhesive strength value can bond well to an adherend. From such a standpoint, the initial adhesive strength is suitably about 2 N/20mm or greater, preferably about 3 N/20mm or greater, or more preferably about 5 N/20mm or greater (e.g. about 7 N/20mm or greater, typically about 9 N/20mm or greater). The maximum initial adhesive strength is not particularly limited and can be below 30 N/20mm, or below 20 N/20mm (e.g. below 15 N/20mm). The initial adhesive strength is the peel strength determined before the curing treatment. In particular, the initial adhesive strength is determined by the method described later in Examples.

The PSA sheet disclosed herein may have a post-curing 180° peel strength (post-heating/curing adhesive strength) of about 3 N/20mm or less, determined after the PSA layer is applied to a stainless steel plate and subjected to a heating/curing treatment. PSA sheets limited in post-heating/curing adhesive strength are easily separated from adherends and the adhesive transfer tends to be preferably prevented as well. From such a standpoint, the post-heating/curing adhesive strength is suitably about 2 N/20mm or less, or preferably about 1 N/20mm or less (e.g. 0.7 N/20mm or less, typically 0.5 N/20mm or less). The minimum post-heating/curing adhesive strength can be, for instance, about 0.1 N/20mm or greater. In particular, the post-heating/curing adhesive strength is determined by the method described later in Examples.

The PSA sheet disclosed herein may have an adhesive strength reduction rate of 50 % or higher, determined by the following equation:

$$\text{Adhesive strength reduction rate (\%)} = (1 - B/A) \times 100$$

(In the equation, A is the initial 180° peel strength to stainless steel plate (N/20mm) and B is the post-heating/curing 180° peel strength to stainless steel plate (N/20mm)). The adhesive strength reduction rate is preferably 65 % or higher, more preferably 75 % or higher, or yet more preferably 85 % or higher (e.g. 90 % or higher). The PSA sheet showing at least the prescribed adhesive strength reduction rate bonds well to an adherend before curing; and even when exposed to a high temperature, after curing, adhesive transfer is greatly prevented and the reduced adhesive strength allows easy separation from the adherend. The maximum adhesive strength reduction rate can be about 99 % or lower (e.g.

95 % or lower).

The PSA sheet disclosed herein may show a left-on-adherend residual PSA (leftover adhesive) size of 10 μm or greater and below 100 μm in a leftover adhesive test carried out by the method described later in Examples. It preferably shows a leftover adhesive size below 10 μm or shows no observable leftover adhesive. According to the PSA sheet satisfying this property, even when exposed to a high temperature, after curing, adhesive transfer can be greatly prevented during separation from the adherend.

<Applications>

The application of the PSA sheet disclosed herein is not particularly limited. For the post-curing properties capable of greatly preventing adhesive transfer during separation from the adherend, it can be preferably used in an application where it is applied to an adherend and removed therefrom afterwards. Such applications include a temporary fastening sheet and a protective sheet. For instance, it can also be preferably used as a process material that is fixed to an adherend and removed therefrom in a manufacturing process of an electronic device or electronic part.

The PSA sheet disclosed herein can be preferably used, for instance, as a PSA sheet used in an environment exposed to heating at or above a prescribed temperature (e.g. 100 °C to 230 °C, typically 130 °C to 200 °C, or even 150 °C to 175 °C) after applied. Even when used in such an environment exposed to heating, the PSA sheet disclosed herein can bond well before curing with at least the prescribed bonding strength to an adherend; and after curing, it can greatly prevent adhesive transfer during separation from the adherend. For instance, the PSA sheet disclosed herein having at least the prescribed adhesive strength reduction rate can exhibit excellent removability. Thus, it is suitable, for instance, as a PSA sheet used in an embodiment where it is removed after the heating.

Favorable applications of the PSA sheet disclosed herein include applications for semiconductor device manufacturing. For instance, in semiconductor wafer processing (typically silicon wafer processing), it can be preferably used as a wafer-fastening sheet (typically a laser dicing sheet) to fasten the wafer to a stationary board (e.g. a hard base such as a glass plate or an acrylic plate). The PSA sheet disclosed herein can also be preferably used as a protective sheet to protect the wafer (e.g. the face for circuit formation) in the wafer processing. The sheet may be required to have suitable adhesiveness so as not to peel off the adherend (typically a semiconductor device or a hard base) during processing and being conveyed in the manufacturing as well as a property to separate well from the adhered after achieving the purpose. Of special importance is that the sheet is inhibited upon heating against degradation of the properties such as tight adhesion. The PSA sheet disclosed herein can be preferably used, satisfying the properties required for the applications.

Another possible favorable application of the PSA sheet disclosed herein is an application where several miniaturized semiconductor chips (LED chips, etc.) are mounted onto the adhesive face of a single PSA sheet, processed such as sealed with resin on the PSA sheet, and separated from the PSA sheet after processed. In this application, because it is heated at a high temperature during the resin sealing, heat resistance is required such as unimpaired ease of removal even after heating, etc. The PSA sheet disclosed herein maintains good properties (typically tight adhesion) against heating as described above, greatly prevents adhesive transfer during removal from adherends (semiconductor chips), and further shows excellent removability from adherends. According to such a PSA sheet, damage to the adherend surface can be prevented during removal. The PSA sheet is favorably used on FOWLP (fan out wafer level package) and CSP (chip scale package). When used for these purposes, it may contribute to higher capacities and higher performance of various semiconductor products.

As described above, the PSA sheet disclosed herein can be preferably applied for use in manufacturing semiconductor devices. Accordingly, the present Description provides a method for producing a semiconductor device, using a PSA sheet disclosed herein. In a preferable embodiment, the production method includes a step of fastening a semiconductor to a PSA sheet (fastening step) and a step of processing the semiconductor (processing step). In a more preferable embodiment, the processing step includes a step of heating the PSA sheet and the semiconductor to 100 °C or a higher temperature (e.g. 150 °C to 175 °C) (heating step). The processing step may include a dicing step before or after the heating step. The semiconductor can be in a form of semiconductor wafer or semiconductor chip. The heating step can be, for instance, a step of sealing a semiconductor chip with a resin (e.g. a silicone resin, etc.).

The production method may include, after the processing step, a step of separating the PSA sheet and the semiconductor (typically a semiconductor chip) (removal step, typically a separation step). The separation can be carried out by applying transfer tape to the semiconductor surface (on the reverse side of the PSA sheet-bonding face). In the production method, the PSA sheet is subjected to a curing treatment typically after the processing step and before the separation step. The curing treatment can be preferably a step of irradiating active energy rays (e.g. UV). It is noted that because other technical matters necessary for producing the semiconductor device can be practiced based on the common technical knowledge in the pertaining field by a skilled person, particulars are not described here.

The PSA sheet disclosed herein is favorable as a temporary fastening sheet used in manufacturing of thin base boards such as circuit boards (e.g. printed circuit boards (PCB), flexible printed circuits (FPC)), organic EL panels, color

filters, electronic paper and flexible displays. For instance, in PCB chip fastening, heating may also be involved in wire bonding and resin sealing; and therefore, by using the PSA sheet disclosed herein to securely bond and fasten an adherend and carrying out a curing treatment after heating, adhesive transfer can be greatly prevented during separation from the adherend while obtaining good separation from the adherend. Furthermore, the PSA sheet disclosed herein can be preferably used as a support tape for a thin wafer. In this application, in solder paste printing on a thin wafer, the PSA sheet can be exposed to heating in a solder reflow process. When the PSA sheet disclosed herein is applied to a thin wafer as the adherend, used as a support tape, and upon heating, a timely curing treatment is then carried out; adhesive transfer can be greatly prevented during separation from the adherend while obtaining good separation of the PSA sheet from the adherend.

As described above, the PSA sheet disclosed herein can be preferably applied for manufacturing a thin base board such as a circuit board (typically a PCB). Accordingly, this Description provides a method for producing a thin base board (e.g. a circuit board, organic EL panel, color filter, electronic paper, flexible display) using the PSA sheet. In a preferable embodiment, the production method includes a step of fastening a thin base board (typically the backside thereof) to a PSA sheet (fastening step) and a step of processing the thin base board. In a more preferable embodiment, the processing step includes a heating step where a temperature rises to 60 °C or higher (e.g. 100 °C to 230 °C, typically 150 °C to 175 °C).

The processing step according to some embodiments includes a die bonding step and a wire bonding step, and may further include a molding step and a package dicing step. The die bonding step is typically a step of placing several chips on a thin base board such as a PCB; the wire bonding step is a step of bonding a wire to the chips; and the molding step can be, for instance, a step of sealing the chips on the PCB with a resin such as an epoxy resin. The production method may include, after the processing step, a step of separating the PSA sheet and the thin base board (removal step, typically a separation step). In the production method, the PSA sheet is subjected to a curing treatment typically after the processing step and before the separation step. The curing treatment can be preferably a step of irradiating active energy rays (e.g. UV). It is noted that because other technical matters necessary for producing a thin base board such as a PCB can be practiced based on the common technical knowledge in the pertaining field by a skilled person, particulars are not described here.

The circuit board (typically an FPC: flexible printed circuit) according to other embodiments include a step of applying the PSA sheet as a support tape to the backside of a fastening tape fixing a thin wafer; and a step of processing the thin wafer. In a more preferable embodiment, the processing step includes a heating step where a temperature rises to 100 °C or higher (e.g. 150 °C to 300 °C, typically 250 °C to 260 °C) (heating step). The processing step in such a production method can be a solder paste printing step. The solder paste printing step may include a solder ball drop process and a solder reflow process. The production method may include, after the processing step, a step of separating the PSA sheet and the fastening tape (removal step, typically a separation step). In the production method, the PSA sheet is subjected to a curing treatment typically after the processing step and before the separation step. The curing treatment can be preferably a step of irradiating active energy rays (e.g. UV). It is noted that because other technical matters necessary for producing a thin base board such as an FPC can be practiced based on the common technical knowledge in the pertaining field by a skilled person, particulars are not described here.

The matters disclosed by this description include the following:

(1) A PSA sheet having a PSA layer comprising a carbon-carbon double bond and satisfying
a property: the PSA layer has an elastic modulus of 22 MPa or greater, determined by nanoindentation after a heating/curing treatment in which the PSA sheet is heated at 180 °C for one hour, left standing at 25 °C for 30 minutes and then irradiated with UV rays at an intensity of 60 mW/cm$^2$.

(2) A PSA sheet having a PSA layer comprising a carbon-carbon double bond, wherein

the PSA layer comprises an acrylic polymer,
the acrylic polymer is formed from monomers including an alkyl (meth)acrylate, and
the alkyl (meth)acrylate includes an alkyl (meth)acrylate whose alkyl group has 7 or fewer carbon atoms.

(3) The PSA sheet according to (1) or (2) above, having an adhesive strength reduction rate of 65 % or higher, determined by the following equation:

$$\text{Adhesive strength reduction rate (\%)} = (1 - \text{B/A}) \times 100$$

(in this equation, A is the initial 180° peel strength to stainless steel plate (N/20mm) and B is the post-heating/curing 180° peel strength to stainless steel plate (N/20mm))

(4) The PSA sheet according to any of (1) to (3) above, wherein the PSA layer comprises a polymer having the

carbon-carbon double bond.

(5) The PSA sheet according to (4) above, wherein the polymer is an acrylic polymer.

(6) The PSA sheet according to (5) above, wherein

the acrylic polymer is formed from monomers including an alkyl (meth)acrylate, and
the alkyl (meth)acrylate comprises an alkyl (meth)acrylate A1 whose alkyl group has 9 or fewer carbon atoms.

(7) The PSA sheet according to (6) above, wherein the alkyl (meth)acrylate A1 content in the monomers is 20 % by weight or higher.

(8) The PSA sheet according to (6) or (7) above, wherein the alkyl (meth)acrylate comprises an alkyl (meth)acrylate A2 whose alkyl group has 7 or more carbon atoms, as the alkyl (meth)acrylate A1 or as a monomer different from the alkyl (meth)acrylate A1.

(9) The PSA sheet according to any of (1) to (8) above, further having a substrate layer and the PSA layer is provided to at least one face of the substrate layer.

(10) The PSA sheet according to (9) above, which is an adhesively single-faced PSA sheet wherein the PSA layer is provided to one face of the substrate layer.

(11) The PSA sheet according to (9) above, which is an adhesively double-faced PSA sheet wherein the PSA layer is provided to each face of the substrate layer.

(12) The PSA sheet according to (9) above, which is an adhesively double-faced PSA sheet wherein a first PSA layer is provided as the PSA layer to a first face of the substrate layer and a second PSA layer different from the first PSA layer is provided to a second face of the substrate layer.

(13) The PSA sheet according to any of (1) to (8) above, which is a substrate-free adhesively double-faced PSA sheet essentially consisting of the PSA layer.

Several working examples relating to the present invention are described below, but the present invention is not intended to be limited to these examples. In the description below, "parts" and "%" are based on weight unless otherwise specified.

<Test methods>

[Elastic modulus of post-heating/curing PSA layer]

The PSA layer’s elastic modulus after the heating/curing treatment is determined based on nanoindentation. The elastic modulus by nanoindentation refers to an elastic modulus determined as follows: While a probe is pushed into a specimen (PSA layer surface), the applied load on the probe and the penetration depth are continuously measured during loading and unloading; and from the resulting applied load-penetration depth curve, the elastic modulus is determined.

The measurement conditions for the heating/curing treatment and nanoindentation are as shown below.

(Heating/curing treatment conditions)

Heating treatment: 180 °C of temperature, 1 hour
Cooling: environment at room temperature (25 °C), 30 minutes
UV irradiation: carried out after heating treatment and cooling under the following conditions:

UV irradiation machine: product name NEL SYSTEM UM810 available from Nitto Seiko Co., Ltd., high-pressure mercury lamp (light source)
Dose: 60 mW/cm$^2$ of intensity, 8 sec of time

(Nanoindentation measurement conditions)

Indenter used: Berkovich (trigonal pyramid) diamond indenter
Measurement method: Single indentation measurement
Measurement temperature: room temperature (25 °C)

Indentation depth setting: 3000 nm
Rate of removal: 500 nm/sec

[Initial adhesive strength]

A PSA sheet is cut 20 mm wide by 140 mm long in size to prepare a measurement sample and the sample is adhered to a stainless steel plate (SUS304BA plate) based on JIS Z 0237:2000. In particular, in atmosphere at a temperature of 23 ± 2 °C and relative humidity (RH) 65 ± 5 %, the measurement sample is press-bonded with a 2 kg roller moved back and forth once to adhere to the SUS304BA plate. Subsequently, the resultant is set in a tensile tester having a thermostat bath set at 23 °C and left standing for 30 minutes. After left standing, in an environment at 23 °C, while the measurement sample is peeled from the stainless steel plate at a peel angle of 180° at a speed of 300 mm/min, the load is measured; and the average load after the peak load during this is determined and used as the initial adhesive strength (initial to-SUS 180° peel strength) (N/20mm-width). As the tensile tester, product name SHIMADZU AUTOGRAPH AG-120kN available from Shimadzu Corporation or a comparable product can be used. When the measurement sample is a double-faced PSA sheet, the unmeasured face can be backed with PET film to carry out the measurement.

[Post-heating/curing adhesive strength]

A PSA sheet is cut 20 mm wide by 140 mm long in size to prepare a measurement sample and the sample is adhered to a stainless steel plate (SUS304BA plate) based on JIS Z 0237:2000. In particular, in atmosphere at a temperature of 23 ± 2 °C and 65 ± 5 % RH, the measurement sample is press-bonded with a 2 kg roller moved back and forth once to adhere to the SUS304BA plate. After adhered, the measurement sample is heated at a temperature of 180 °C for one hour. After heating, it is cooled at room temperature (25 °C) for 30 minutes. After cooled, the substrate layer side (on the reverse side (backside) of the measured adhesive face) of the PSA sheet is irradiated with UV under the conditions shown below.

After UV irradiation, the sample is set in a tensile tester having a thermostat bath set at 23 °C and left standing for 30 minutes. After left standing, in an environment at 23 °C, while the measurement sample is peeled from the stainless steel plate at a peel angle of 180° at a speed of 300 mm/min, the load is measured; and the average load after the peak load during this is determined and used as the post-heating/curing adhesive strength (post-heating/curing to-SUS 180° peel strength) (N/20mm-width). As the tensile tester, product name SHIMADZU AUTOGRAPH AG-120kN available from Shimadzu Corporation or a comparable product can be used. When the measurement sample is a double-faced PSA sheet, the unmeasured face can be backed with PET film to carry out the measurement.

(UV irradiation conditions)

UV irradiation machine: product name NEL SYSTEM UM810 available from Nitto Seiki Co., Ltd., high-pressure mercury lamp (light source)
Dose: 60 $mW/cm^2$ of intensity, 8 sec of time

[Adhesive strength reduction rate]

From the equation: adhesive strength reduction rate (%) = $(1 - B/A) \times 100$, the adhesive strength reduction rate (%) is determined.

In the equation, A is the initial adhesive strength and B is the post-heating/curing adhesive strength.

[Work-holding properties]

Based on the measurement results of initial adhesive strength, the following grades are assigned:

A (excellent): 4.0 N/20mm or greater
B (good): above 1.0 N/20mm, below 4.0 N/20mm
C (poor): 1.0 N/20mm or less

[Post-heating removability]

Based on the measurement results of post-heating/curing adhesive strength, the following grades are assigned:

A (excellent): below 1.0 N/20mm
B (good): 1.0 N/20mm or greater, 3.0 N/20mm or less
C (poor): above 3.0 N/20mm

[Leftover adhesive test]

To a stainless steel plate (SUS304BA plate), a strip of PET tape (5 μm thick) having a prescribed width is adhered to form a step (raised section) on the flat surface of the SUS plate. A PSA sheet is cut into a strip having a prescribed width. The PSA sheet strip is placed over the PET tape on the SUS plate and adhered to the SUS plate including the step formed of the PET tape with the length direction of the PSA sheet orthogonally crossing the length direction of the PET tape strip. Press-bonding by the adhesion is done by one back-and-forth round of a 2 kg roller. Under the same conditions of heating, UV irradiation and peeling as the post-heating/curing adhesive strength, heating and UV irradiation are carried out and the PSA sheet is peeled from the PET tape-bearing SUS plate. Observation by laser microscopy (×108) is carried out with a focus on the adherend's step after the removal of the PSA sheet and the following grades are assigned with respect to the state of leftover adhesive.

A (pass): PSA (leftover adhesive) below 10 μm in size left on the adherend was observed or no leftover adhesive was observed (interfacial peel)
B (acceptable): leftover adhesive of 10 μm or larger and below 100 μm in size was observed; minor cohesive failure was observed
C (fail): leftover adhesive of 100 μm or larger in size was observed (cohesive failure)

<Example 1>

In a reaction vessel equipped with a thermometer, stirrer, nitrogen inlet and so on, were obtained a monomer mixture at a ratio of 65 parts of ethyl acetate (EA), 17 parts of lauryl acrylate (LA) and 18 parts of 2-hydroxyethyl acrylate (HEA). To 100 parts of the monomer mixture, were added 0.225 part (non-volatiles) of BPO (product name NYPER BY WEIGHT available from NOF Corporation) as the polymerization initiator and ethyl acetate as the polymerization solvent. Polymerization reaction was carried out at 60 °C under a nitrogen flow to obtain an approximately 30 % acrylic polymer solution in ethyl acetate. The resultant was allowed to undergo addition reaction with 23 parts of methacryloyloxyethyl isocyanate (MOD to prepare a C=C-containing acrylic polymer. To the ethyl acetate solution of the acrylic polymer, per 100 parts of non-volatiles of the acrylic polymer, were added 0.2 part (non-volatiles) of an isocyanate-based crosslinking agent (product name CORONATE L available from Nippon Polyurethane Industry Co., Ltd.) and 3 parts (non-volatiles) of a photopolymerization initiator (product name IRGACURE 127 (Irg127) available from Ciba Specialty Chemicals; 2-hydroxy-1-{4-[4-(2-hydroxy-2-methyl-propionyl)-benzil]phenyl}-2-methylpropan-1-one). Further, was added an antioxidant (product name IRGANOX 1010" available from Ciba Japan K.K.; pentaerythritol•tetrakis[3-(3,5-di-tert-butyl-4-hydroxyphenyl) propionate]) to 0.1 % of the PSA layer. A PSA composition according to this Example was thus obtained.
The PSA composition was applied onto easy-bonding PET film, allowed to dry at 120 °C for 3 minutes, and further aged at 50 °C for 24 hours to prepare a single-faced PSA sheet having a 30 μm thick PSA layer on one face of a 50 μm thick PET resin substrate layer.

<Example 2 to Example 15>

The monomer compositions for the acrylic polymers were modified as shown in Table 1. Otherwise in the same manner as Example 1, were prepared PSA compositions according to the respective Examples. In the same manner as Example 1, using the resulting PSA composition, were prepared single-faced PSA sheets according to the respective Examples. It is noted that in Table 1, 2EHA is 2-ethylhexyl acrylate and BA is n-butyl acrylate.

<Example 16>

The amount of isocyanate-based crosslinking agent was changed to 1.0 part. Otherwise in the same manner as Example 14, was prepared a PSA composition according to this Example. In the same manner as Example 14, using the resulting PSA composition, was prepared a single-faced PSA sheet according to this Example.
The PSA sheets according to the respective Examples were evaluated as described in the test methods.

[Table 1]

Table 1

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|---|---|---|---|
| Composition (pt) HEA | 18 | 17 | 19 | 19 | 16 | 17 | | 15 | 18 | 20 | 17 | 13 | 11 | 11 | 10 | 11 |
| 4HBA | | | | | | | 22 | | | | | | | | | |
| EA | 65 | 58 | 57 | 67 | 47 | 51 | 62 | 30 | 36 | 80 | | 26 | 11 | | | |
| LA | 17 | 25 | 24 | | 37 | | 16 | | | | | 61 | 78 | | 90 | |
| 2EHA | | | | 14 | | 32 | | 55 | | | | | | 89 | | 89 |
| BA | | | | | | | | | 46 | | 83 | | | | | |
| MOI | 23 | 22 | 25 | 24 | 20 | 22 | 22 | 19 | 23 | 26 | 21 | 17 | 14 | 12 | 12 | 12 |
| Photopolymerization initiator (pt)* | 3 | 3 | 3 | 3 | 3 | 3 | 3 | 3 | 3 | 3 | 3 | 3 | 3 | 3 | 3 | 3 |
| Crosslinking agent (pt)* | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 1 |
| Post-heating/curing elastic modulus (MPa) | 165 | 110 | 170 | 180 | 100 | 160 | 90 | 70 | 120 | 194 | 72 | 35 | 40 | 21 | 18 | 19 |
| Initial adhesive strength (N/20mm) | 9.1 | 6.8 | 5.9 | 10.3 | 6.1 | 9.3 | 6.9 | 7.1 | 8.2 | 10.2 | 3.9 | 3.2 | 6.1 | 7.0 | 0.5 | 1.0 |
| Post-heating/curing adhesive strength (N/20mm) | 0.90 | 0.60 | 0.70 | 1.43 | 0.40 | 0.63 | 0.60 | 0.53 | 0.80 | 1.90 | 0.48 | 0.30 | 0.40 | 0.45 | 0.20 | 0.80 |
| Adhesive strength reduction rate (%) | 90 | 91 | 88 | 86 | 93 | 93 | 91 | 93 | 90 | 81 | 88 | 91 | 93 | 94 | 60 | 20 |
| Work-holding properties | A | A | A | A | A | A | A | A | A | A | B | B | A | A | C | C |
| Post-heating removability | A | A | A | B | A | A | A | A | A | B | A | A | A | A | A | A |
| Leftover adhesive test | A | A | A | A | A | A | A | A | A | A | A | B | B | C | C | C |

*number of parts to 100 parts of acrylic polymer

As shown in Table 1, the PSA sheets according to Examples 1 to 13 having PSA layers with post-heating/curing elastic moduli of 22 MPa or greater hardly caused adhesive transfer in the leftover adhesive test where they were applied to the adherend with a step, heated at a high temperature of 180 °C, then subjected to a curing treatment, and subsequently peeled from the adherend. In addition, the PSA sheets of Examples 1 to 13 showed good results for the work-holding properties, having pre-heating/curing initial bonding strength above 1.0 N/20mm. With respect to the PSA sheets of Examples 1 to 13, the post-heating/curing adhesive strength decreased by 65 % or more in comparison with the pre-curing value, showing excellent post-heating removability as well. On the other hand, Examples 14 to 16 using PSA layers with post-heating/curing elastic moduli below 22 MPa all failed the leftover adhesive test.

These results indicate that according to a PSA sheet that has a C=C-containing PSA layer and satisfies the property that the PSA layer has an elastic modulus of 22 MPa or greater, determined by nanoindentation after a heating/curing treatment in which the PSA sheet is heated at 180 °C for one hour, left standing at 25 °C for 30 minutes and then irradiated with UV rays at an intensity of 60 mW/cm$^2$, good bonding to adherends can be obtained with at least the prescribed bonding strength before the curing treatment; and even when exposed to a high temperature, after the curing treatment, adhesive transfer can be greatly prevented during separation from the adherends.

Although specific embodiments of the present invention have been described in detail above, these are merely for illustrations and do not limit the scope of claims. The art according to the claims includes various modifications and changes made to the specific embodiments illustrated above.

[Reference Signs List]

1, 2, 3, 4, 5, 6 PSA sheets
10 substrate layer
21, 22 PSA layers
31, 32 release liners

## Claims

1. A pressure-sensitive adhesive sheet having a pressure-sensitive adhesive layer comprising a carbon-carbon double bond and satisfying a property: the pressure-sensitive adhesive layer has an elastic modulus of 22 MPa or greater, determined by nanoindentation after a heating/curing treatment in which the pressure-sensitive adhesive sheet is heated at 180 °C for one hour, left standing at 25 °C for 30 minutes and then irradiated with UV rays at an intensity of 60 mW/cm$^2$.

2. The pressure-sensitive adhesive sheet according to Claim 1, having an adhesive strength reduction rate of 65 % or higher, determined by the following equation:

   adhesive strength reduction rate (%) = $(1 - B/A) \times 100$
   (in this equation, A is the initial 180° peel strength to stainless steel plate (N/20mm) and B is the post-heating/curing 180° peel strength to stainless steel plate)

3. The pressure-sensitive adhesive sheet according to Claim 1 or 2, wherein the pressure-sensitive adhesive layer comprises a polymer having the carbon-carbon double bond.

4. The pressure-sensitive adhesive sheet according to Claim 3, wherein the polymer is an acrylic polymer.

5. The pressure-sensitive adhesive sheet according to Claim 4, wherein

   the acrylic polymer is formed from monomers including an alkyl (meth)acrylate, and
   the alkyl (meth)acrylate comprises an alkyl (meth)acrylate A1 whose alkyl group has 9 or fewer carbon atoms.

6. The pressure-sensitive adhesive sheet according to Claim 5, wherein the monomers comprise at least 20 % alkyl (meth)acrylate A1 by weight.

7. The pressure-sensitive adhesive sheet according to Claim 5 or 6, wherein the alkyl (meth)acrylate comprises an alkyl (meth)acrylate A2 whose alkyl group has 7 or more carbon atoms, as the alkyl (meth)acrylate A1 or as a

monomer different from the alkyl (meth)acrylate A1.

**8.** The pressure-sensitive adhesive sheet according to any one of Claims 1 to 7, further having a substrate layer of which at least one face is provided with the pressure-sensitive adhesive layer.

**9.** The pressure-sensitive adhesive sheet according to Claim 8, wherein the pressure-sensitive adhesive sheet is an adhesively single-faced pressure-sensitive adhesive sheet that comprises the pressure-sensitive adhesive layer provided to one face of the substrate layer.

**10.** The pressure-sensitive adhesive sheet according to Claim 8, wherein the pressure-sensitive adhesive sheet is an adhesively double-faced pressure-sensitive adhesive sheet that comprises the pressure-sensitive adhesive layer provided to each face of the substrate layer.

**11.** The pressure-sensitive adhesive sheet according to Claim 8, wherein the pressure-sensitive adhesive sheet is an adhesively double-faced pressure-sensitive adhesive sheet that comprises a first pressure-sensitive adhesive layer provided as the pressure-sensitive adhesive layer to one face of the substrate layer and a second pressure-sensitive adhesive layer different from the first pressure-sensitive adhesive layer provided to the other face of the substrate layer.

**12.** The pressure-sensitive adhesive sheet according to any one of Claims 1 to 7, wherein the pressure-sensitive adhesive sheet is a substrate-free adhesively double-faced pressure-sensitive adhesive sheet essentially consisting of the pressure-sensitive adhesive layer.

**13.** A pressure-sensitive adhesive sheet having a pressure-sensitive adhesive layer comprising a carbon-carbon double bond, wherein

the pressure-sensitive adhesive layer comprises an acrylic polymer,
the acrylic polymer is formed from monomers including an alkyl (meth)acrylate, and
the alkyl (meth)acrylate comprises an alkyl (meth)acrylate whose alkyl group has 7 or fewer carbon atoms.

**14.** The pressure-sensitive adhesive sheet according to Claim 13, having an adhesive strength reduction rate of 65 % or higher, determined by the following equation:

adhesive strength reduction rate (%) = $(1 - B/A) \times 100$
(in this equation, A is the initial 180° peel strength to stainless steel plate (N/20mm) and B is the post-heating/curing 180° peel strength to stainless steel plate)

**15.** The pressure-sensitive adhesive sheet according to Claim 13 or 14, wherein the acrylic polymer is an acrylic polymer having the carbon-carbon double bond.

**16.** The pressure-sensitive adhesive sheet according to any one of Claims 13 to 15, further having a substrate layer of which at least one face is provided with the pressure-sensitive adhesive layer.

**17.** The pressure-sensitive adhesive sheet according to Claim 16, wherein the pressure-sensitive adhesive sheet is an adhesively single-faced pressure-sensitive adhesive sheet that comprises the pressure-sensitive adhesive layer provided to one face of the substrate layer.

**18.** The pressure-sensitive adhesive sheet according to Claim 16, wherein the pressure-sensitive adhesive sheet is an adhesively double-faced pressure-sensitive adhesive sheet that comprises the pressure-sensitive adhesive layer provided to each face of the substrate layer.

**19.** The pressure-sensitive adhesive sheet according to Claim 16, wherein the pressure-sensitive adhesive sheet is an adhesively double-faced pressure-sensitive adhesive sheet that comprises a first pressure-sensitive adhesive layer provided as the pressure-sensitive adhesive layer to one face of the substrate layer and a second pressure-sensitive adhesive layer different from the first pressure-sensitive adhesive layer provided to the other face of the substrate layer.

**20.** The pressure-sensitive adhesive sheet according to any one of Claims 13 to 15, wherein the pressure-sensitive

adhesive sheet is a substrate-free adhesively double-faced pressure-sensitive adhesive sheet essentially consisting of the pressure-sensitive adhesive layer.

[Fig. 1]

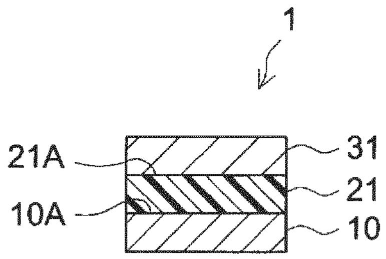


FIG.1

[Fig. 2]

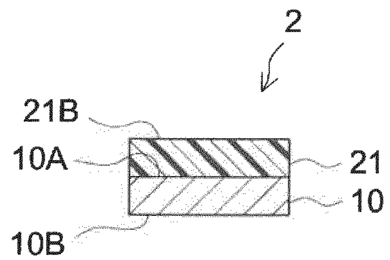


FIG.2

[Fig. 3]

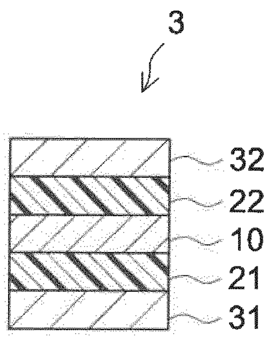


FIG.3

[Fig. 4]

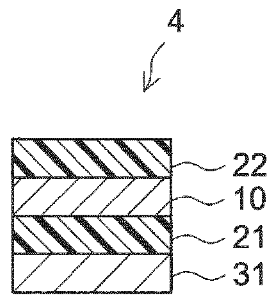


FIG.4

[Fig. 5]

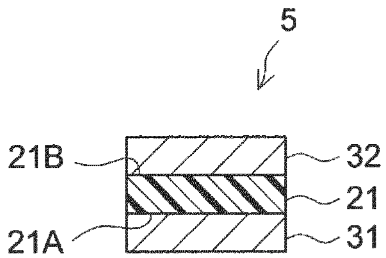


FIG.5

[Fig. 6]

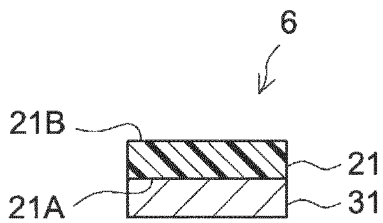


FIG.6

## INTERNATIONAL SEARCH REPORT

International application No. PCT/JP2020/003510

**A. CLASSIFICATION OF SUBJECT MATTER**

Int.Cl. C09J133/00(2006.01)i, C09J133/04(2006.01)i, C09J7/10(2018.01)i, C09J7/38(2018.01)i
FI: C09J7/38, C09J133/00, C09J133/04, C09J7/10

According to International Patent Classification (IPC) or to both national classification and IPC

**B. FIELDS SEARCHED**

Minimum documentation searched (classification system followed by classification symbols)
Int.Cl. C09J133/00, C09J133/04, C09J7/10, C09J7/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-82104 A (LINTEC CORPORATION) 18.05.2017 (2017-05-18), example 3, paragraphs [0029], [0089], table 1 | 1-11, 13-19 |
| X | JP 2010-212474 A (NITTO DENKO CORPORATION) 24.09.2010 (2010-09-24), claim 1, example 1, tables 1, 2, paragraph [0031] | 1-7, 12-15, 20 |
| X | JP 2001-200215 A (NITTO DENKO CORPORATION) 24.07.2001 (2001-07-24), claim 1, example 1, table 1, paragraph [0016] | 1-9, 13-17 |
| X | JP 2007-242698 A (NITTO DENKO CORPORATION) 20.09.2007 (2007-09-20), claim 1, example 1, table 1, paragraphs [0044], [0053] | 1-6, 8-11, 13-19 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.02.2020 | 10.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/003510

| | | |
|---|---|---|
| JP 2017-82104 A | 18.05.2017 | (Family: none) |
| JP 2010-212474 A | 24.09.2010 | US 2010/0230036 A1<br>claim 1, example 1,<br>tables 1, 2, paragraph [0032]<br>CN 101831253 A<br>TW 201037052 A |
| JP 2001-200215 A | 24.07.2001 | (Family: none) |
| JP 2007-242698 A | 20.09.2007 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019019830 A
- JP 2015120884 A
- JP 2018012751 A
- JP 4502363 B

### Non-patent literature cited in the description

- **C. A. DAHLQUIST.** Adhesion: Fundamentals and Practice. McLaren & Sons, 1966, 143
- Polymer Deterioration/Decay <Classified by Resin> Troubleshooting and Latest Modification/Stabilization Technologies. Polymer Physical Property Research Group, 1981